(19) **Europäisches Patentamt**
**European Patent Office**
**Office européen des brevets**

(11) **EP 4 685 723 A1**

(12) **EUROPEAN PATENT APPLICATION**
published in accordance with Art. 153(4) EPC

(43) Date of publication:
**28.01.2026 Bulletin 2026/05**

(21) Application number: **24778190.9**

(22) Date of filing: **29.03.2024**

(51) International Patent Classification (IPC):
***G06Q 30/0202*** *(2023.01)* ***G06Q 30/0201*** *(2023.01)*

(52) Cooperative Patent Classification (CPC):
**G06Q 30/02022; G06Q 30/0206;** Y02D 10/00

(86) International application number:
**PCT/CN2024/084654**

(87) International publication number:
**WO 2024/199404 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 CN 202310372707**

(71) Applicant: **Huawei Technologies Co., Ltd.
Shenzhen, Guangdong 518129 (CN)**

(72) Inventors:
• **WU, Chuhan
Shenzhen, Guangdong 518129 (CN)**
• **JIA, Qinglin
Shenzhen, Guangdong 518129 (CN)**
• **LI, Jingjie
Shenzhen, Guangdong 518129 (CN)**
• **ZHU, Hong
Shenzhen, Guangdong 518129 (CN)**
• **TANG, Ruiming
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **CONSUMPTION PREDICTION METHOD AND RELATED DEVICE**

(57) A purchase prediction method and a related device thereof are provided. The method includes: obtaining information associated with a user (501); performing feature extraction processing on the information, to obtain a purchase probability of the user (502); performing first regression processing on the information, to obtain a first purchase limit of the user (503), and performing second regression processing on the information, to obtain a second purchase limit of the user (504), where the first regression processing and the second regression processing are different regression processing; and finally obtaining a predicted purchase limit of the user based on the purchase probability, the first purchase limit, and the second purchase limit (505).

**EP 4 685 723 A1**

Obtain information associated with a user — 501

↓

Perform feature extraction processing on the information, to obtain a purchase probability of the user — 502

↓

Perform first regression processing on the information, to obtain a first purchase limit of the user — 503

↓

Perform second regression processing on the information, to obtain a second purchase limit of the user, where the first regression processing and the second regression processing are different regression processing — 504

↓

Obtain a predicted purchase limit of the user based on the purchase probability, the first purchase limit, and the second purchase limit — 505

**FIG. 5**

## Description

This application claims priority to Chinese Patent Application No. 202310372707.4, filed with the China National Intellectual Property Administration on March 31, 2023 and entitled "PURCHASE PREDICTION METHOD AND RELATED DEVICE THEREOF", which is incorporated herein by reference in its entirety.

## TECHNICAL FIELD

Embodiments of this application relate to the field of artificial intelligence (artificial intelligence, AI) technologies, and in particular, to a purchase prediction method and a related device thereof.

## BACKGROUND

A recommendation system is one of core technologies of a plurality of current internet applications. The system may recommend, based on purchase behavior of the user, some commodities or services to a user for purchase. It can be learned that purchase prediction on the user is one of important functions that the recommendation system needs to have.
In a related technology, a neural network model of an AI technology may be used to implement purchase prediction on the user. Specifically, information associated with the user may be first input into the neural network model. Then, the neural network model may perform a series of processing on the information, to obtain a purchase probability of the user and an initial purchase limit of the user. Finally, the neural network model may determine a final purchase limit of the user based on the purchase probability of the user and the initial purchase limit of the user.
In the foregoing process, because the neural network determines the final purchase limit of the user by using only the initial purchase limit of the user, a considered factor is single. Consequently, the final purchase limit of the user obtained through prediction is not accurate enough.

## SUMMARY

Embodiments of this application provide a purchase prediction method and a related device thereof. In a process of performing purchase prediction on a user, considered factors are comprehensive, so that a finally obtained predicted purchase limit of the user can have sufficiently high accuracy.
In a first aspect, an embodiment of this application provides a purchase prediction method, where the method includes:
When purchase prediction needs to be performed on a user, information associated with the user may be first obtained.
After the information associated with the user is obtained, the information may be input into a target model. In this case, the target model may perform feature extraction processing on the information, to obtain a purchase probability of the user, that is, a probability that the user may perform purchase. In addition, the target model may further perform first regression processing on the information, to obtain a first purchase limit of the user. In addition, the target model may further perform second regression processing on the information, to obtain a second purchase limit of the user. The first regression processing and the second regression processing are two different types of regression processing.
The purchase probability of the user, the first purchase limit of the user, and the second purchase limit of the user are obtained. The target model may calculate the purchase probability, the first purchase limit, and the second purchase limit, to obtain a predicted purchase limit of the user. In this way, purchase prediction on the user is completed.
It can be learned from the foregoing method that, when purchase prediction needs to be performed on the user, the information associated with the user may be first obtained, and the information is input into the target model. Then, the target model may perform feature extraction processing on the information, to obtain the purchase probability of the user. In addition, the target model may further perform first regression processing on the information, to obtain the first purchase limit of the user, and perform second regression processing on the information, to obtain the second purchase limit of the user. Finally, the target model may process the purchase probability, the first purchase limit, and the second purchase limit, to obtain the predicted purchase limit of the user. In the foregoing process, the first regression processing and the second regression processing are two different types of regression processing. In other words, the target model includes two different regression branches, and two purchase limits of the user can be preliminarily obtained from two different perspectives. In this case, the target model can finally determine the predicted purchase limit of the user based on the two purchase limits. Considered factors in the determining process are comprehensive, so that the predicted purchase limit of the user can have sufficiently high accuracy.
In a possible implementation, the method further includes: performing third regression processing on the information, to obtain a third purchase limit of the user, where the first regression processing, the second regression processing, and the third regression processing are different regression processing; and the obtaining a predicted purchase limit of the user based on the purchase probability, the first purchase limit, and the second purchase limit includes: obtaining the predicted purchase limit of the user based on the purchase probability, the first purchase limit, the second purchase limit, and the third purchase limit. In the foregoing implementation, after the information associated with the user is obtained, the target model may further perform third regression processing on the information, to obtain the third purchase limit of the user. The first regression processing, the second regression processing, and the third regression processing are three different types of regression processing. In this case, the target model may calculate the purchase probability, the first purchase limit, the second purchase limit, and the third purchase limit, to obtain the predicted purchase limit of the user.

In a possible implementation, the performing first regression processing on the information, to obtain a first purchase limit of the user includes: processing the information based on a first multi-layer perceptron, to obtain a first feature of the information; constructing a target distribution based on the first feature, where the target distribution indicates a correspondence between a plurality of purchase limits and a plurality of purchase probabilities; and performing averaging processing on the plurality of purchase limits indicated by the target distribution, to obtain the first purchase limit of the user. In the foregoing implementation, after receiving the information associated with the user, the target model may first process the information based on the first multi-layer perceptron, to obtain the first feature of the information, then calculate the first feature, to obtain a core parameter of the target distribution, in addition, and construct the target distribution by using the core parameter, where the target distribution indicates the correspondence between the plurality of purchase limits and the plurality of purchase probabilities. After the target distribution is obtained, the target model may perform averaging calculation on the plurality of purchase limits indicated by the target distribution, to accurately obtain the first purchase limit of the user.

In a possible implementation, the performing second regression processing on the information, to obtain a second purchase limit of the user includes: processing the information based on a second multi-layer perceptron, to obtain a second feature of the information; and performing linear rectification processing on the second feature, to obtain the second purchase limit of the user. In the foregoing implementation, after receiving the information associated with the user, the target model may first process the information based on the second multi-layer perceptron, to obtain the second feature of the information, and then perform linear rectification calculation on the second feature, to accurately obtain the second purchase limit of the user.

In a possible implementation, the performing third regression processing on the information, to obtain a third purchase limit of the user includes: processing the information based on a third multi-layer perceptron, to obtain a third feature of the information; and performing normalization processing on the third feature, to obtain the third purchase limit of the user. In the foregoing implementation, after receiving the information associated with the user, the target model may first process the information based on the third multi-layer perceptron, to obtain the third feature of the information, and then perform normalization calculation on the third feature, to accurately obtain the third purchase limit of the user.

In a possible implementation, the performing feature extraction processing on the information, to obtain a purchase probability of the user includes: processing the information based on a fourth multi-layer perceptron, to obtain a fourth feature of the information; and performing mapping processing on the fourth feature, to obtain the purchase probability of the user. In the foregoing implementation, after receiving the information associated with the user, the target model may first process the information based on the fourth multi-layer perceptron, to obtain the fourth feature of the information, and perform mapping calculation on the fourth feature, to accurately obtain the purchase probability of the user.

In a possible implementation, the obtaining the predicted purchase limit of the user based on the purchase probability, the first purchase limit, the second purchase limit, and the third purchase limit includes: performing averaging processing on the first purchase limit, the second purchase limit, and the third purchase limit, to obtain a fourth purchase limit; and performing multiplication processing on the purchase probability and the fourth purchase limit, to obtain the predicted purchase limit of the user. In the foregoing implementation, after the purchase probability of the user, the first purchase limit of the user, the second purchase limit of the user, and the third purchase limit of the user are obtained, the target model may first perform averaging calculation on the first purchase limit, the second purchase limit, and the third purchase limit, to obtain the fourth purchase limit of the user. Then, the target model may perform multiplication calculation on the purchase probability and the fourth purchase limit, to obtain and output the predicted purchase limit of the user.

In a second aspect, an embodiment of this application provides a model training method. The method includes: obtaining information associated with a user; processing information by using a to-be-trained model, to obtain a predicted purchase limit of the user, where the to-be-trained model is used to: perform feature extraction processing on the information, to obtain a purchase probability of the user; perform first regression processing on the information, to obtain a first purchase limit of the user; perform second regression processing on the information, to obtain a second purchase limit of the user, where the first regression processing and the second regression processing are different regression processing; and obtain the predicted purchase limit of the user based on the purchase probability, the first purchase limit, and the second purchase limit; obtaining a target loss based on the purchase probability, the first purchase limit, and the second purchase limit; and updating, based on the target loss, a parameter of the to-be-trained model until a model training condition is met, to obtain a target model.

The target model obtained through training in the foregoing method has a function of purchase prediction. Specifically, when purchase prediction needs to be performed on the user, the information associated with the user may be first obtained, and the information is input into the target model. Then, the target model may perform feature extraction processing on the information, to obtain the purchase probability of the user. In addition, the target model may further perform first regression processing on the information, to obtain the first purchase limit of the user, and perform second regression processing on the information, to obtain the second purchase limit of the user. Finally, the target model may process the purchase probability, the first purchase limit, and the second purchase limit, to obtain the predicted purchase limit of the user. In the foregoing process, the first regression processing and the second regression processing are two different types of regression processing. In other words, the target model includes two different regression branches, and two purchase limits of the user can be preliminarily obtained from two different perspectives. In this case, the target model can finally determine the predicted purchase limit of the user based on the two purchase limits. Considered factors in the determining process are comprehensive, so that the predicted purchase limit of the user can have sufficiently high accuracy.

In a possible implementation, the to-be-trained model is further used to perform third regression processing on the information, to obtain a third purchase limit of the user, where the first regression processing, the second regression processing, and the third regression processing are different regression processing. The to-be-trained model is used to obtain the predicted purchase limit of the user based on the purchase probability, the first purchase limit, the second purchase limit, and the third purchase limit. The obtaining a target loss based on the purchase probability, the first purchase limit, and the second purchase limit includes: obtaining the target loss based on the purchase probability, the first purchase limit, the second purchase limit, and the third purchase limit.

In a possible implementation, the obtaining the target loss based on the purchase probability, the first purchase limit, the second purchase limit, and the third purchase limit includes: obtaining the target loss based on the purchase probability, an actual purchase probability of the user, the first purchase limit, the second purchase limit, the third purchase limit, and an actual purchase limit of the user.

In a possible implementation, the to-be-trained model is used to: process the information based on a first multi-layer perceptron, to obtain a first feature of the information; construct a target distribution based on the first feature, where the target distribution indicates a correspondence between a plurality of purchase limits and a plurality of purchase probabilities; and perform averaging processing on the plurality of purchase limits indicated by the target distribution, to obtain the first purchase limit of the user.

In a possible implementation, the to-be-trained model is used to: process the information based on a second multi-layer perceptron, to obtain a second feature of the information; and perform linear rectification processing on the second feature, to obtain the second purchase limit of the user.

In a possible implementation, the to-be-trained model is used to: process the information based on a third multi-layer perceptron, to obtain a third feature of the information; and perform normalization processing on the third feature, to obtain the third purchase limit of the user.

In a possible implementation, the to-be-trained model is used to: process the information based on a fourth multi-layer perceptron, to obtain a fourth feature of the information; and perform mapping processing on the fourth feature, to obtain the purchase probability of the user.

In a possible implementation, the to-be-trained model is used to: perform averaging processing on the first purchase limit, the second purchase limit, and the third purchase limit, to obtain a fourth purchase limit; and perform multiplication processing on the purchase probability and the fourth purchase limit, to obtain the predicted purchase limit of the user.

In a third aspect, an embodiment of this application provides a purchase prediction apparatus. The apparatus includes a target model. The apparatus includes: a first obtaining module, configured to obtain information associated with a user; a first processing module, configured to perform feature extraction processing on the information, to obtain a purchase probability of the user; a second processing module, configured to perform first regression processing on the information, to obtain a first purchase limit of the user; a third processing module, configured to perform second regression processing on the information, to obtain a second purchase limit of the user, where the first regression processing and the second regression processing are different regression processing; and a second obtaining module, configured to obtain a predicted purchase limit of the user based on the purchase probability, the first purchase limit, and the second purchase limit.

It can be learned from the foregoing apparatus that, when purchase prediction needs to be performed on the user, the information associated with the user may be first obtained, and the information is input into the target model. Then, the target model may perform feature extraction processing on the information, to obtain the purchase probability of the user. In addition, the target model may further perform first regression processing on the information, to obtain the first purchase limit of the user, and perform second regression processing on the information, to obtain the second purchase limit of the user. Finally, the target model may process the purchase probability, the first purchase limit, and the second purchase limit, to obtain the predicted purchase limit of the user. In the foregoing process, the first regression processing and the second regression processing are two different types of regression processing. In other words, the target model includes two different regression branches, and two purchase limits of the user can be preliminarily obtained from two different perspectives. In this case, the target model can finally determine the predicted purchase limit of the user based on the two purchase limits. Considered factors in the determining process are comprehensive, so that the predicted purchase limit of the user can have sufficiently high accuracy.

In a possible implementation, the apparatus further includes: a fourth processing module, configured to perform third regression processing on the information, to obtain a third purchase limit of the user, where the first regression processing, the second regression processing, and the third regression processing are different regression processing; and the second obtaining module, configured to obtain the predicted purchase limit of the user based on the purchase probability, the first purchase limit, the second purchase limit, and the third purchase limit.

In a possible implementation, the second processing module is configured to: process the information based on a first multi-layer perceptron, to obtain a first feature of the information; construct a target distribution based on the first feature, where the target distribution indicates a correspondence between a plurality of purchase limits and a plurality of purchase probabilities; and perform averaging processing on the plurality of purchase limits indicated by the target distribution, to obtain the first purchase limit of the user.

In a possible implementation, the third processing module is configured to: process the information based on a second multi-layer perceptron, to obtain a second feature of the information; and perform linear rectification processing on the second feature, to obtain the second purchase limit of the user.

In a possible implementation, the fourth processing module is configured to: process the information based on a third multi-layer perceptron, to obtain a third feature of the information; and perform normalization processing on the third feature, to obtain the third purchase limit of the user.

In a possible implementation, the first processing module is configured to: process the information based on a fourth multi-layer perceptron, to obtain a fourth feature of the information; and perform mapping processing on the fourth feature, to obtain the purchase probability of the user.

In a possible implementation, the second obtaining module is configured to: perform averaging processing on the first purchase limit, the second purchase limit, and the third purchase limit, to obtain a fourth purchase limit; and perform multiplication processing on the purchase probability and the fourth purchase limit, to obtain the predicted purchase limit of the user.

In a fourth aspect, an embodiment of this application provides a model training apparatus. The apparatus includes: a first obtaining module, configured to obtain information associated with a user; a processing module, configured to process information by using a to-be-trained model, to obtain a predicted purchase limit of the user, where the to-be-trained model is used to: perform feature extraction processing on the information, to obtain a purchase probability of the user; perform first regression processing on the information, to obtain a first purchase limit of the user; perform second regression processing on the information, to obtain a second purchase limit of the user, where the first regression processing and the second regression processing are different regression processing; and obtain the predicted purchase limit of the user based on the purchase probability, the first purchase limit, and the second purchase limit; a second obtaining module, configured to obtain a target loss based on the purchase probability, the first purchase limit, and the second purchase limit; and an update module, configured to update, based on the target loss, a parameter of the to-be-trained model until a model training condition is met, to obtain a target model.

The target model obtained through training by the foregoing apparatus has a function of purchase prediction. Specifically, when purchase prediction needs to be performed on the user, the information associated with the user may be first obtained, and the information is input into the target model. Then, the target model may perform feature extraction processing on the information, to obtain the purchase probability of the user. In addition, the target model may further perform first regression processing on the information, to obtain the first purchase limit of the user, and perform second regression processing on the information, to obtain the second purchase limit of the user. Finally, the target model may process the purchase probability, the first purchase limit, and the second purchase limit, to obtain the predicted purchase limit of the user. In the foregoing process, the first regression processing and the second regression processing are two different types of regression processing. In other words, the target model includes two different regression branches, and two purchase limits of the user can be preliminarily obtained from two different perspectives. In this case, the target model can finally determine the predicted purchase limit of the user based on the two purchase limits. Considered factors in the determining process are comprehensive, so that the predicted purchase limit of the user can have sufficiently high accuracy.

In a possible implementation, the to-be-trained model is further used to perform third regression processing on the information, to obtain a third purchase limit of the user, where the first regression processing, the second regression processing, and the third regression processing are different regression processing. The to-be-trained model is used to obtain the predicted purchase limit of the user based on the purchase probability, the first purchase limit, the second purchase limit, and the third purchase limit. The update module is configured to obtain the target loss based on the purchase probability, the first purchase limit, the second purchase limit, and the third purchase limit.

In a possible implementation, the update module is configured to obtain the target loss based on the purchase probability, an actual purchase probability of the user, the first purchase limit, the second purchase limit, the third purchase limit, and an actual purchase limit of the user.

In a possible implementation, the to-be-trained model is used to: process the information based on a first multi-layer perceptron, to obtain a first feature of the information; construct a target distribution based on the first feature, where the target distribution indicates a correspondence between a plurality of purchase limits and a plurality of purchase probabilities; and perform averaging processing on the plurality of purchase limits indicated by the target distribution, to obtain the first purchase limit of the user.

In a possible implementation, the to-be-trained model is used to: process the information based on a second multi-layer perceptron, to obtain a second feature of the information; and perform linear rectification processing on the second feature, to obtain the second purchase limit of the user.

In a possible implementation, the to-be-trained model is used to: process the information based on a third multi-layer perceptron, to obtain a third feature of the information; and perform normalization processing on the third feature, to obtain the third purchase limit of the user.

In a possible implementation, the to-be-trained model is used to: process the information based on a fourth multi-layer perceptron, to obtain a fourth feature of the information; and perform mapping processing on the fourth feature, to obtain the purchase probability of the user.

In a possible implementation, the to-be-trained model is used to: perform averaging processing on the first purchase limit, the second purchase limit, and the third purchase limit, to obtain a fourth purchase limit; and perform multiplication processing on the purchase probability and the fourth purchase limit, to obtain the predicted purchase limit of the user.

In a fifth aspect, an embodiment of this application provides a purchase prediction apparatus. The apparatus includes a memory and a processor. The memory stores code, and the processor is configured to execute the code. When the code is executed, the purchase prediction apparatus performs the method according to the first aspect or any one of the possible implementations of the first aspect.

In a sixth aspect, an embodiment of this application provides a model training apparatus. The apparatus includes a memory and a processor. The memory stores code, and the processor is configured to execute the code. When the code is executed, the model training apparatus performs the method according to the second aspect or any one of the possible implementations of the second aspect.

In a seventh aspect, an embodiment of this application provides a circuit system. The circuit system includes a processing circuit, and the processing circuit is configured to perform the method according to the first aspect, any one of the possible implementations of the first aspect, the second aspect, or any one of the possible implementations of the second aspect.

In an eighth aspect, an embodiment of this application provides a chip system. The chip system includes a processor, configured to invoke a computer program or computer instructions stored in a memory, so that the processor performs the method according to the first aspect, any one of the possible implementations of the first aspect, the second aspect, or any one of the possible implementations of the second aspect.

In a possible implementation, the processor is coupled to the memory through an interface.

In a possible implementation, the chip system further includes a memory, and the memory stores a computer program or computer instructions.

In a ninth aspect, an embodiment of this application provides a computer storage medium, and the computer storage medium stores a computer program. When the program is executed by a computer, the computer is enabled to implement the method according to the first aspect, any one of the possible implementations of the first aspect, the second aspect, or any one of the possible implementations of the second aspect.

In a tenth aspect, an embodiment of this application provides a computer program product, and the computer program product stores instructions. When the instructions are executed by a computer, the computer is enabled to implement the method according to the first aspect, any one of the possible implementations of the first aspect, the second aspect, or any one of the possible implementations of the second aspect.

In this embodiment of this application, when purchase prediction needs to be performed on the user, information associated with the user may be first obtained, and the information is input into the target model. Then, the target model may perform feature extraction processing on the information, to obtain the purchase probability of the user. In addition, the target model may further perform first regression processing on the information, to obtain the first purchase limit of the user, and perform second regression processing on the information, to obtain the second purchase limit of the user. Finally, the target model may process the purchase probability, the first purchase limit, and the second purchase limit, to obtain the predicted purchase limit of the user. In the foregoing process, the first regression processing and the second regression processing are two different types of regression processing. In other words, the target model includes two different regression branches, and two purchase limits of the user can be preliminarily obtained from two different perspectives. In this case, the target model can finally determine the predicted purchase limit of the user based on the two purchase limits. Considered factors in the determining process are comprehensive, so that the predicted purchase limit of the user can have sufficiently high accuracy.

**BRIEF DESCRIPTION OF DRAWINGS**

FIG. 1 is a diagram of a structure of an artificial intelligence main framework;
FIG. 2a is a diagram of a structure of a purchase prediction system according to an embodiment of this application;
FIG. 2b is a diagram of another structure of a purchase prediction system according to an embodiment of this application;
FIG. 2c is a diagram of a related device for purchase prediction according to an embodiment of this application;
FIG. 3 is a diagram of an architecture of a system 100 according to an embodiment of this application;
FIG. 4 is a diagram of a structure of a target model according to an embodiment of this application;
FIG. 5 is a schematic flowchart of a purchase prediction method according to an embodiment of this application;
FIG. 6 is a diagram of another structure of a target model according to an embodiment of this application;
FIG. 7 is a diagram of another structure of a target model according to an embodiment of this application;
FIG. 8 is a diagram of a statistical distribution according to an embodiment of this application;
FIG. 9 is a schematic flowchart of a model training method according to an embodiment of this application;
FIG. 10a is a diagram of a structure of a model training framework according to an embodiment of this application;
FIG. 10b is a diagram of another structure of a model training framework according to an embodiment of this application;
FIG. 11 is a diagram of a structure of a purchase prediction apparatus according to an embodiment of this application;
FIG. 12 is a diagram of a structure of a model training apparatus according to an embodiment of this application;
FIG. 13 is a diagram of a structure of an execution device according to an embodiment of this application;
FIG. 14 is a diagram of a structure of a training device according to an embodiment of this application; and
FIG. 15 is a diagram of a structure of a chip according to an embodiment of this application.

**DESCRIPTION OF EMBODIMENTS**

Embodiments of this application provide a purchase prediction method and a related device thereof. In a process of performing purchase prediction on a user, considered factors are comprehensive, so that a finally obtained predicted purchase limit of the user can have sufficiently high accuracy.

In the specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

A recommendation system is one of core technologies of a plurality of current internet applications. The system may recommend some commodities or services to a user based on purchase behavior of the user (for example, whether the user performs purchase and a purchase limit of the user), so that the user purchases the commodities or services. It can be learned that purchase prediction on the user is one of important functions that the recommendation system needs to have.

In a related technology, a neural network model of an AI technology may be used to implement purchase prediction on the user. Specifically, information associated with the user (for example, personal information of the user, commodity information of the user, and context information of the user) may be first input into the neural network model. Then, the neural network model may perform a series of processing on the information, to obtain a purchase probability of the user and an initial purchase limit of the user. Finally, the neural network model may determine a final purchase limit of the user based on the purchase probability of the user and the initial purchase limit of the user. For example, it is assumed that an initial purchase limit of the user obtained by using the model is 100 CNY. When the purchase probability of the user obtained by using the model is 0, a final purchase limit of the user is 0. When the purchase probability of the user obtained by using the model is 1, the final purchase limit of the user is equal to the initial purchase limit of the user, that is, 100 CNY.

In the foregoing process, because the neural network determines the final purchase limit of the user by using only the initial purchase limit of the user, a considered factor is single. Consequently, the final purchase limit of the user obtained through prediction is not accurate enough.

To resolve the foregoing problem, an embodiment of this application provides a purchase prediction method. The method may be implemented with reference to an artificial intelligence (artificial intelligence, AI) technology. The AI technology is a technical discipline that simulates, extends, and expands human intelligence by using a digital computer or a machine controlled by a digital computer. The AI technology obtains an optimal result by perceiving an environment, obtaining knowledge, and using the knowledge. In other words, the artificial intelligence technology is a branch of computer science, and attempts to understand essence of intelligence and produce a new intelligent machine that can react in a manner similar to human intelligence. Using artificial intelligence for data processing is a common application of artificial intelligence.

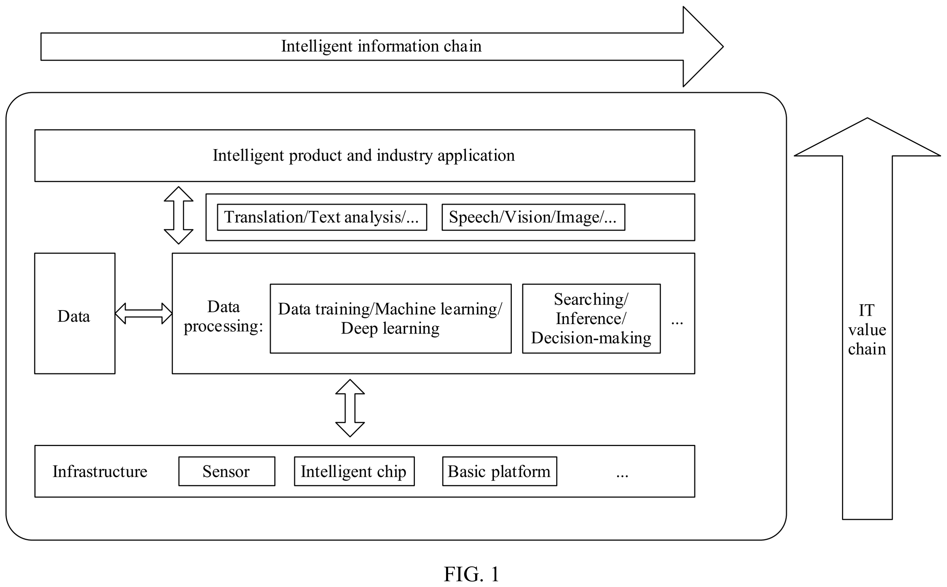

An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from data obtaining to data processing. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The basic platform includes related platforms such as a distributed computing framework and a network for assurance and support, including cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formalized information according to an inference control policy. Typical functions are searching and matching.

The decision-making is a process of making a decision after intelligent information is inferred, and usually provides functions such as classification, ranking, and prediction.

(4) General capability

After the data processing mentioned above is performed on the data, some general capabilities may be further formed based on a data processing result. For example, the general capability may be an algorithm or a general system, for example, translation, text analysis, computer vision processing, speech recognition, and image recognition.

(5) Intelligent product and industry application

The intelligent product and the industry application are a product and an application of the artificial intelligence system in various fields, and involve packaging of overall artificial intelligence solutions, to productize and apply intelligent information decision-making. Application fields of the intelligent information decision-making mainly include intelligent terminals, intelligent transportation, intelligent health care, autonomous driving, smart cities, and the like.

The following describes several application scenarios of this application.

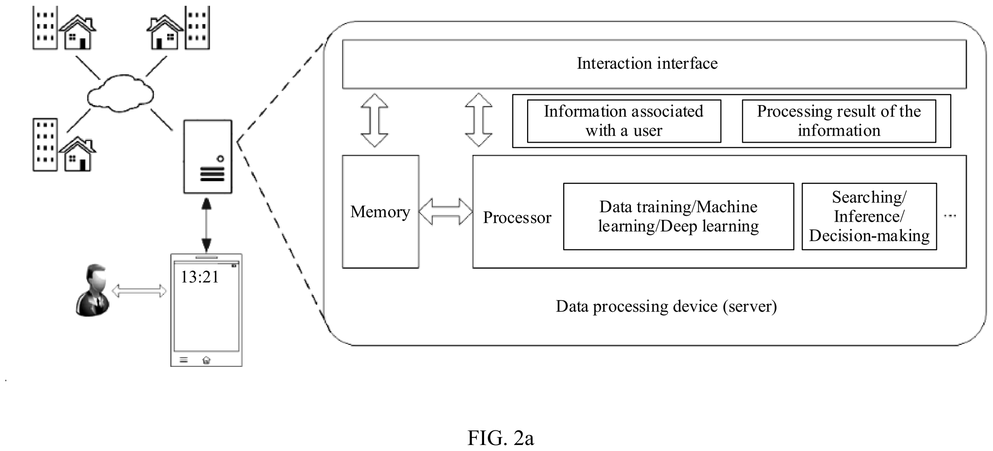

FIG. 2a is a diagram of a structure of a purchase prediction system according to an embodiment of this application. The purchase prediction system includes user equipment and a data processing device. The user equipment includes an intelligent terminal like a mobile phone, a personal computer, or an information processing center. The user equipment is an initiator of purchase prediction, and is used as an initiator of a purchase prediction request. Generally, a user initiates the request by using the user equipment.

The data processing device may be a device or a server that has a data processing function, for example, a cloud server, a network server, an application server, and a management server. The data processing device receives the purchase prediction request from an intelligent terminal through an interaction interface, and then performs purchase prediction in manners such as machine learning, deep learning, searching, inference, and decision-making by using a memory storing data and a processor processing data. The memory in the data processing device may be a general name, and includes a local storage and a database that stores historical data. The database may be on the data processing device, or may be on another network server.

In the purchase prediction system shown in FIG. 2a, the user equipment may receive an instruction of a user. For example, the user equipment may obtain user-related information input/selected by the user, and then initiate the request to the data processing device, so that the data processing device performs purchase prediction processing on the information obtained by the user equipment, and a corresponding processing result for the information is obtained. For example, the user equipment may obtain the user-related information input by the user, and then initiate the purchase prediction request to the data processing device, so that the data processing device performs a series of processing on the information based on the purchase prediction request, to obtain the processing result of the information, namely, a predicted purchase limit of the user.

In FIG. 2a, the data processing device may perform a purchase prediction method in embodiments of this application.

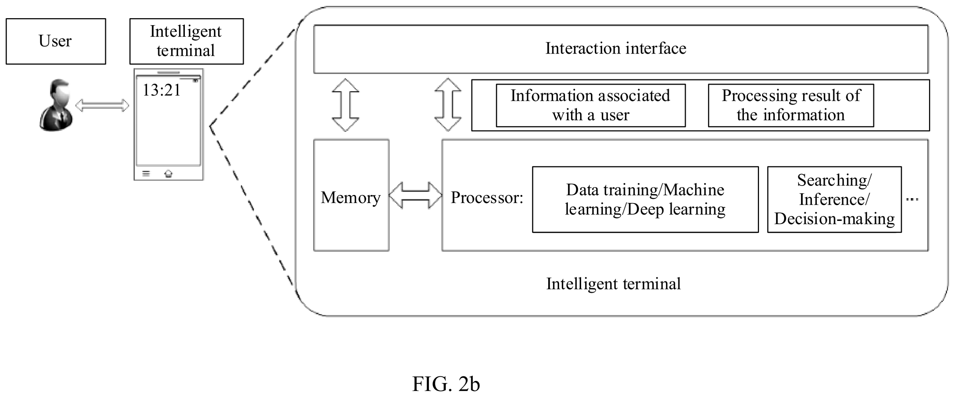

FIG. 2b is a diagram of another structure of a purchase prediction system according to an embodiment of this application. In FIG. 2b, user equipment is directly used as a data processing device, and the user equipment can directly obtain an input from a user and directly perform processing by using hardware of the user equipment. A specific process is similar to that in FIG. 2a, for details, refer to the foregoing descriptions. Details are not described herein again.

In the purchase prediction system shown in FIG. 2b, the user equipment may receive an instruction of the user. For example, the user equipment may obtain user-related information input/selected by the user, and then perform a series of processing on the information, to obtain a processing result of the information, namely, a predicted purchase limit of the user.

In FIG. 2b, the user equipment may perform the purchase prediction method in embodiments of this application.

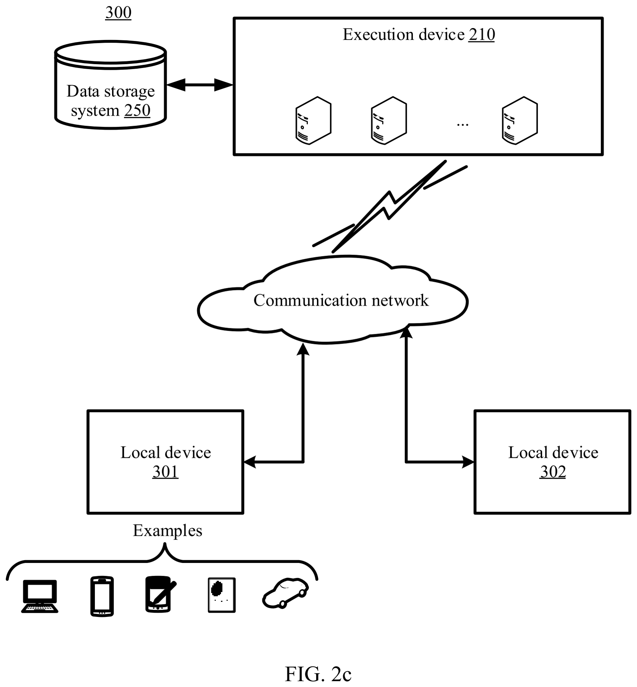

FIG. 2c is a diagram of a related device for purchase prediction according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210, the data storage system 250 may be integrated on the execution device 210, or may be disposed on a cloud or another network server.

The processor in FIG. 2a and FIG. 2b may perform data training/machine learning/deep learning by using a neural network model or another model (for example, a model based on a support vector machine), and perform purchase prediction application on an image by using a model obtained through final data training or learning, to obtain a corresponding processing result.

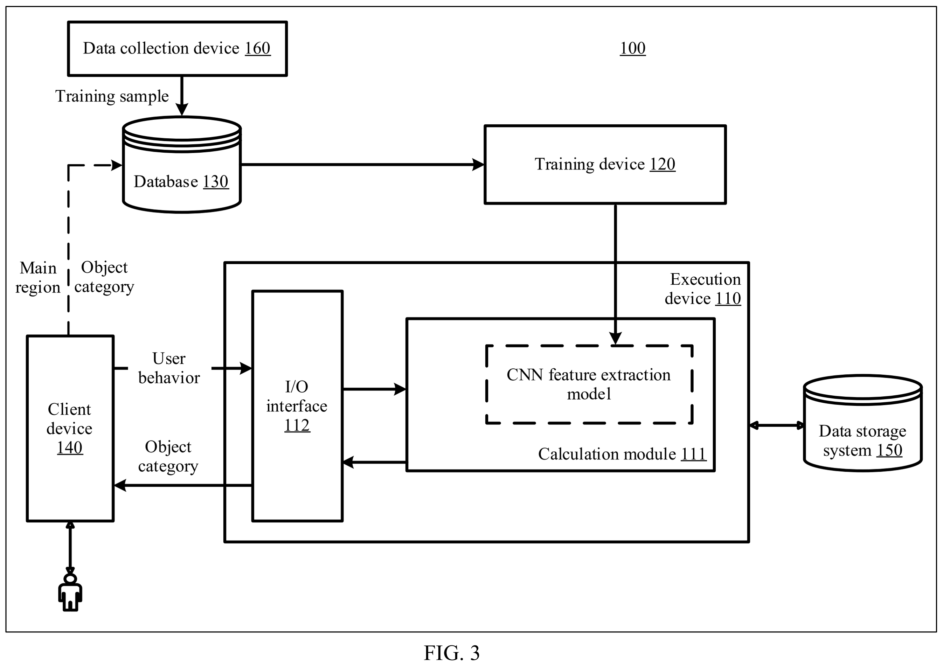

FIG. 3 is a diagram of an architecture of a system 100 according to an embodiment of this application. In FIG. 3, an execution device 110 is configured with an input/output (input/output, I/O) interface 112, configured to exchange data with an external device, and a user may input data to the I/O interface 112 by using a client device 140. The input data in this embodiment of this application may include each to-be-scheduled task, a resource that can be invoked, and another parameter.

In a process in which the execution device 110 preprocesses the input data, or in a process in which a calculation module 111 of the execution device 110 performs related processing such as calculation (for example, implementing a function of a neural network in this application), the execution device 110 may invoke data, code, and the like in a data storage system 150 for corresponding processing, and may further store, in the data storage system 150, data, an instruction, and the like that are obtained through corresponding processing.

Finally, the I/O interface 112 returns the processing result to the client device 140, to provide the processing result to the user.

It should be noted that, for different objectives or different tasks, a training device 120 may generate corresponding target models/rules based on different training data. The corresponding target models/rules may be used to achieve the foregoing objectives or complete the foregoing tasks, to provide a required result for the user. The training data may be stored in a database 130, and is from a training sample collected by a data collection device 160.

In a case shown in FIG. 3, the user may manually provide the input data, and the user may manually provide the input data in an interface provided by the I/O interface 112. In another case, the client device 140 may automatically send the input data to the I/O interface 112. If the client device 140 needs to obtain authorization from the user to automatically send the input data, the user may set a corresponding permission on the client device 140. The user may view, on the client device 140, a result output by the execution device 110. The result may be specifically presented in a specific manner of displaying, sound, action, or the like. The client device 140 may alternatively be used as a data collection end, to collect, as new sample data, input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 3 is merely a diagram of a system architecture according to an embodiment of this application. A location relationship between the devices, the components, the modules, and the like shown in the figure does not constitute any limitation. For example, in FIG. 3, the data storage system 150 is an external memory relative to the execution device 110, but in another case, the data storage system 150 may alternatively be disposed in the execution device 110. As shown in FIG. 3, a neural network may be obtained through training based on the training device 120.

An embodiment of this application further provides a chip. The chip includes a neural network processing unit NPU. The chip may be disposed in the execution device 110 shown in FIG. 3, to complete computing work of the calculation module 111. The chip may alternatively be disposed in the training device 120 shown in FIG. 3, to complete training work of the training device 120 and output a target model/rule.

The neural network processing unit NPU is mounted to a main central processing unit (central processing unit, CPU) (host CPU) as a coprocessor. The host CPU assigns a task. A core part of the NPU is an operation circuit. A controller controls the operation circuit to extract data in a memory (a weight memory or an input memory) and perform an operation.

In some implementations, the operation circuit includes a plurality of process engines (process engine, PE) inside. In some implementations, the operation circuit is a two-dimensional systolic array. The operation circuit may alternatively be a one-dimensional systolic array or another electronic circuit that can perform mathematical operations such as multiplication and addition. In some implementations, the operation circuit is a general-purpose matrix processor.

For example, it is assumed that there is an input matrix A, a weight matrix B, and an output matrix C. The operation circuit fetches, from a weight memory, data corresponding to the matrix B, and caches the data on each PE in the operation circuit. The operation circuit fetches data of the matrix A from the input memory, performs a matrix operation with the matrix B, and stores an obtained partial result or an obtained final result of the matrix in an accumulator (accumulator).

A vector calculation unit may perform further processing such as vector multiplication, vector addition, an exponential operation, a logarithmic operation, or value comparison on an output of the operation circuit. For example, the vector calculation unit may be configured to perform network calculation, such as pooling (pooling), batch normalization (batch normalization), or local response normalization (local response normalization) at a non-convolutional or non-FC layer in a neural network.

In some implementations, the vector calculation unit can store a processed output vector in a unified buffer. For example, the vector calculation unit may apply a nonlinear function to the output of the operation circuit, for example, an accumulated-value vector, to generate an activation value. In some implementations, the vector calculation unit generates a normalized value, a combined value, or a combination thereof. In some implementations, the processed output vector can be used as an activation input to the operation circuit. For example, the processed output vector can be used at a subsequent layer of the neural network.

A unified memory is configured to store input data and output data.

For weight data, a direct memory access controller (direct memory access controller, DMAC) directly transfers input data in the external memory to the input memory and/or the unified memory, stores weight data in the external memory in the weight memory, and stores data in the unified memory in the external memory.

A bus interface unit (bus interface unit, BIU) is configured to implement interaction between the host CPU, the DMAC, and an instruction fetch buffer through a bus.

The instruction fetch buffer (instruction fetch buffer) connected to the controller is configured to store instructions used by the controller.

The controller is configured to invoke the instructions buffered in the instruction fetch buffer, to control a working process of an operation accelerator.

Generally, the unified memory, the input memory, the weight memory, and the instruction fetch buffer may all be on-chip (On-Chip) memories. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses $x_s$ and an intercept of 1 as an input. An output of the operation unit may be as follows:

$$h_{W,b}\left(x\right)=f\left(W^{T}x\right)=f(\sum\nolimits_{s=1}^{n}W_{s}x_{s}+b) \qquad (1)$$

Herein, s=1, 2, ..., n, n is a natural number greater than 1, $W_s$ is a weight of $x_s$, and b is a bias of the neural. f is an activation function (activation function) of the neuron, and is used to introduce a nonlinear feature into the neural network, to convert an input signal in the neuron into an output signal. The output signal of the activation function may be used as an input of a next convolutional layer. The activation function may be a sigmoid function. The neural network is a network formed by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression $y = a(Wx + b)$. From a physical layer, work at each layer of the neural network may be understood as completing transformation from input space to output space (that is, from row space to column space of a matrix) by performing five operations on the input space (a set of input vectors). The five operations include: 1. dimension increasing or dimension reduction; 2. scaling up/down; 3. rotation; 4. translation; and 5. "bending". The operation 1, the operation 2, and the operation 3 are completed by $Wx$, the operation 4 is completed by $+b$, and the operation 5 is completed by $a()$. The word "space" is used herein for expression because a classified object is not a single thing, but a type of thing. Space is a set of all individuals of this type of thing. $W$ is a weight vector, and each value in the vector indicates a weight value of one neuron at this layer of the neural network. The vector $W$ determines space transformation from the input space to the output space described above. In other words, a weight $W$ at each layer controls how to transform space. A purpose of training the neural network is to finally obtain a weight matrix (a weight matrix formed by vectors $W$ at a plurality of layers) at all layers of a trained neural network. Therefore, a training process of the neural network is essentially a manner of learning of control of space transformation, and more specifically, learning of a weight matrix.

Because it is expected that an output of the neural network is as close as possible to a predicted value that is actually desired, a current predicted value of the network may be compared with a target value that is actually desired, and then a weight vector at each layer of the neural network is updated based on a difference between the current predicted value and the target value (there is usually an initialization process before the first update, that is, a parameter is preconfigured for each layer of the neural network). For example, if the predicted value of the network is large, the weight vector is adjusted to reduce the predicted value until the neural network can predict the target value that is actually desired. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

In a training process, a neural network may correct a value of a parameter in an initial neural network model by using an error back propagation (back propagation, BP) algorithm, so that a reconstruction error loss of the neural network model becomes increasingly small. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter like a weight matrix of an optimal neural network model.

The following describes the method provided in this application from a training side of the neural network and an application side of the neural network.

The model training method provided in embodiments of this application relates to data sequence processing, and may be specifically applied to methods such as data training, machine learning, and deep learning, to perform symbolized and formalized intelligent information modeling, extraction, preprocessing, training, and the like on training data (for example, information associated with a user in the model training method provided in embodiments of this application), and finally obtain a trained neural network (for example, the target model in the model training method provided in embodiments of this application). In addition, in the purchase prediction method provided in embodiments of this application, input data (for example, the information associated with the user in the purchase prediction method provided in embodiments of this application) may be input into the trained neural network by using the trained neural network, to obtain output data (for example, the predicted purchase limit of the user in the purchase prediction method provided in embodiments of this application). It should be noted that the model training method and the purchase prediction method provided in embodiments of this application are invented based on a same concept, and may also be understood as two parts of a system, or two stages of an overall procedure, for example, a model training stage and a model application stage.

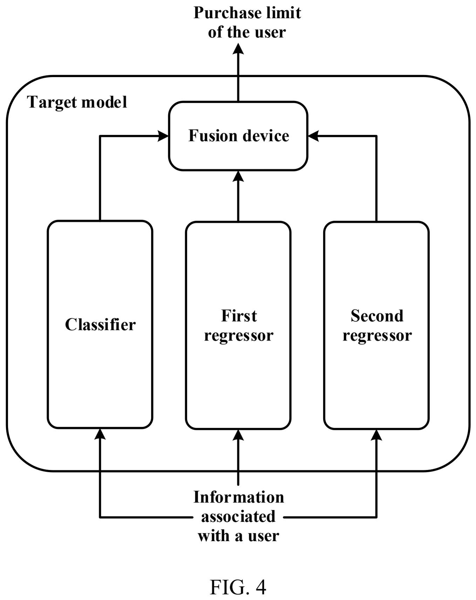

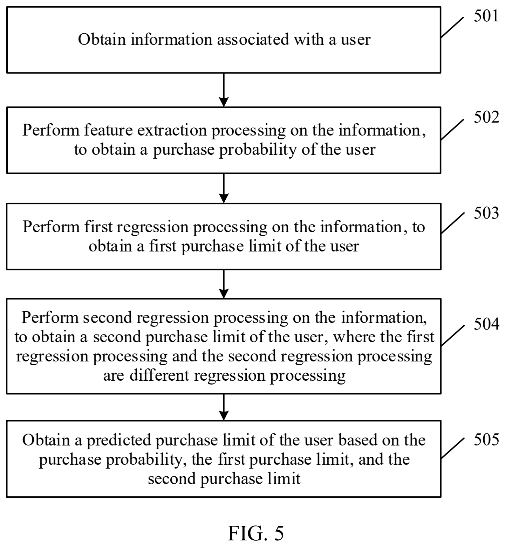

The purchase prediction method provided in embodiments of this application may be implemented by using the target model. As shown in FIG. 4 (FIG. 4 is a diagram of a structure of a target model according to an embodiment of this application), the target model includes a classifier (classifier), a first regressor (regressor), a second regressor, and a fusion (fusion) device. The classifier, the first regressor, and the second regressor are three parallel branches. An input end of the classifier, an input end of the first regressor, and an input end of the second regressor are used as input ends of the entire target model. An output end of the classifier, an output end of the first regressor, and an output end of the second regressor are connected to an input end of the fusion device. An output end of the fusion device is used as an output end of the entire target model. To understand a working procedure of the target model, the following describes the working procedure with reference to FIG. 5. FIG. 5 is a schematic flowchart of a purchase prediction method according to an embodiment of this application. As shown in FIG. 5, the method includes the following steps.

501: Obtain information associated with a user.

In this embodiment, when purchase prediction needs to be performed on the user, the information associated with the user may be first obtained. The information may be information about the user (for example, a name of the user, an age of the user, a gender of the user, an occupation of the user, and a height and a weight of the user), or may be a commodity or a service that the user is interested in (for example, software that the user is interested in, clothing that the user is interested in, and sports that the user is interested in), or may be some context information that the user is currently browsing, or the like.

502: Perform feature extraction processing on the information, to obtain a purchase probability of the user.

503: Perform first regression processing on the information, to obtain a first purchase limit of the user.

504: Perform second regression processing on the information, to obtain a second purchase limit of the user, where the first regression processing and the second regression processing are different regression processing.

After the information associated with the user is obtained, the information may be input into a target model. In this case, a classifier of the target model may perform feature extraction processing on the information, to obtain the purchase probability of the user (which may also be referred to as a probability that the user may perform purchase). In addition, a first regressor of the target model may perform first regression processing on the information, to obtain the first purchase limit of the user (which may also be referred to as an amount that the user may spend). A second regressor of the target model may also perform second regression processing on the information, to obtain the second purchase limit of the user (which may also be referred to as another amount that the user may spend). The first regression processing and the second regression processing are two different types of regression processing.

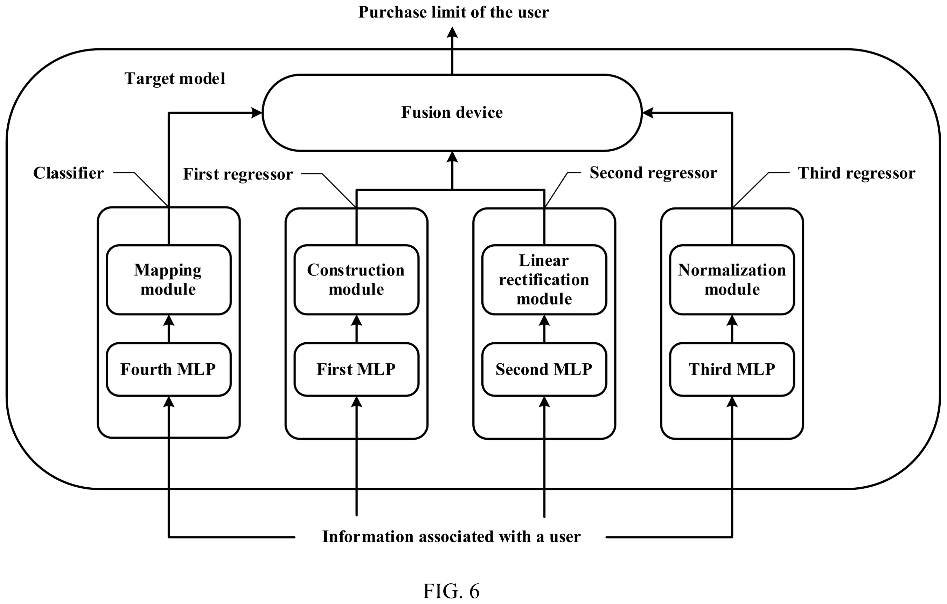

Specifically, as shown in FIG. 6 (FIG. 6 is a diagram of another structure of the target model according to an embodiment of this application), the target model further includes a third regressor. The classifier, the first regressor, the second regressor, and the third regressor are three parallel branches. An input end of the classifier, an input end of the first regressor, an input end of the second regressor, and an input end of the third regressor are used as input ends of the entire target model. An output end of the classifier, an output end of the first regressor, an output end of the second regressor, and an output end of the third regressor are connected to an input end of the fusion device. An output end of the fusion device is used as an output end of the entire target model. In this case, the target model may further perform the following operations.

The third regressor of the target model may perform third regression processing on the information, to obtain a third purchase limit of the user (which may also be referred to as still another amount that the user may spend). The first regression processing, the second regression processing, and the third regression processing are three different types of regression processing.

More specifically, as shown in FIG. 6, the first regressor may include a first multi-layer perceptron and a construction module. In this case, the first regressor may obtain the first purchase limit of the user in the following manner.

After receiving the information associated with the user, the first multi-layer perceptron of the first regressor may first perform a series of processing (for example, a full connection) on the information, to obtain a first feature of the information, and send the first feature of the information to the construction module. After obtaining the first feature of the information, the construction module may calculate the first feature, to obtain a core parameter of a target distribution, and construct the target distribution based on the core parameter. The target distribution indicates a correspondence between a plurality of purchase limits and a plurality of purchase probabilities. After the target distribution is obtained, the construction module may perform averaging processing on the plurality of purchase limits indicated by the target distribution, to obtain the first purchase limit of the user.

More specifically, as shown in FIG. 6, the second regressor may include a second multi-layer perceptron and a linear rectification module (for example, a ReLU function). In this case, the second regressor may obtain the second purchase limit of the user in the following manner.

After receiving the information associated with the user, the second multi-layer perceptron of the second regressor may first perform a series of processing (for example, a full connection) on the information, to obtain a second feature of the information, and send the second feature of the information to the linear rectification module. After obtaining the second feature of the information, the linear correction module may calculate the second feature, to obtain the second purchase limit of the user.

More specifically, as shown in FIG. 6, the third regressor may include a third multi-layer perceptron and a normalization module (for example, a softmax function). In this case, the third regressor may obtain the third purchase limit of the user in the following manner.

After receiving the information associated with the user, the third multi-layer perceptron of the third regressor may first perform a series of processing (for example, a full connection) on the information, to obtain a third feature of the information, and send the third feature of the information to the normalization module. After obtaining the third feature of the information, the normalization module may calculate the third feature, to obtain the third purchase limit of the user.

More specifically, as shown in FIG. 6, the classifier may include a fourth multi-layer perceptron and a mapping module (for example, a sigmoid function). In this case, the classifier may obtain the purchase probability of the user in the following manner.

After receiving the information associated with the user, the fourth multi-layer perceptron of the classifier may first perform a series of processing (for example, a full connection) on the information, to obtain a fourth feature of the information, and send the fourth feature of the information to the mapping module. After obtaining the fourth feature of the information, the mapping module may calculate the fourth feature, to obtain the purchase probability of the user.

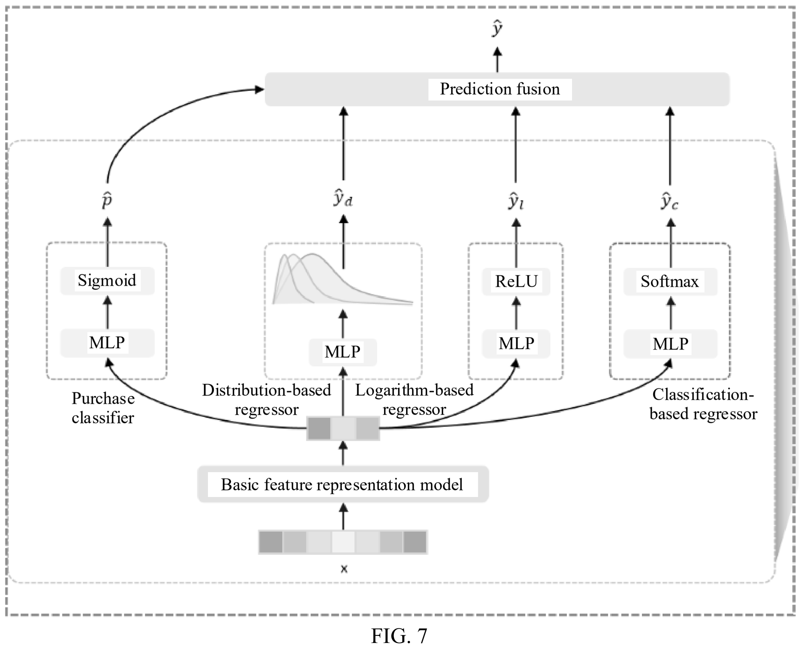

For example, as shown in FIG. 7 (FIG. 7 is a diagram of another structure of the target model according to an embodiment of this application), it is assumed that the information associated with the user is $x$, and the target model includes a basic feature representation model (basic feature representation model), a purchase classifier (purchase classifier), a distribution-based regressor (distribution-based regressor), a logarithm-based regressor (logarithm-based regressor), a classification-based regressor (classification-based regressor), and a prediction fusion (prediction fusion) device, where the basic feature representation model may be any deep learning model. In this case, after $x$ is input into the target model, the basic feature representation model may process $x$, to obtain a feature implicit representation $h$, and send the feature implicit representation to the distribution-based regressor.

In the target model, the purchase classifier includes a multi-layer perceptron (multi-layer perceptron, MLP) and a sigmoid function. After receiving $h$, the multi-layer perceptron in the purchase classifier may process $h$ according to formula (2).

$$h_p = w_p h + b_p$$
$$h'_p = w_p h_p + b_p \qquad (2)$$

In the foregoing formula, $w_p$ and $b_p$ are parameters of the multi-layer perceptron in the purchase classifier, and $h'_p$ is a feature (the foregoing fourth feature) output by the multi-layer perceptron in the purchase classifier. Then, the sigmoid function in the purchase classifier may process $h'_p$ according to formula (3).

$$\hat{p} = \sigma(h'_p) \qquad (3)$$

In the foregoing formula, $\hat{p}$ is a (predicted) purchase probability of the user.

In the target model, the distribution-based regressor includes a multi-layer perceptron and a construction module. After receiving $h$, the multi-layer perceptron in the distribution-based regressor may process $\overline{h}$ according to formula (4).

$$h_d = \mathrm{Re}\,LU(w_d h + b_d)$$
$$\theta' = w_d h_d + b_d \qquad (4)$$

In the foregoing formula, $w_d$ and $b_d$ are parameters of the multi-layer perceptron in the distribution-based regressor, and $\theta'$ is a feature (the foregoing first feature) output by the multi-layer perceptron in the distribution-based regressor. Then, the construction module in the purchase classifier may process $\theta'$ according to formula (5).

$$\theta = \log[1 + \exp(\theta')] \tag{5}$$

In the foregoing formula, $\theta$ is the core parameter of the target distribution. Then, the construction module may construct a target distribution $f$ by using $\theta$, to indicate the correspondence between the plurality of purchase probabilities and the plurality of purchase limits. In this case, the construction module may perform averaging calculation on the plurality of purchase limits, to obtain a purchase limit $\hat{y}_d$ (namely, the foregoing first purchase limit) of the user.

In the target model, the logarithm-based regressor includes a multi-layer perceptron and a ReLU function. After receiving $h$, the multi-layer perceptron in the logarithm-based regressor may process $h$ according to formula (6).

$$h_l = \mathrm{Re}\,LU(w_l h + b_l)$$
$$h_l' = w_l h_l + b_l \tag{6}$$

In the foregoing formula, $w_l$ and $b_l$ are parameters of the multi-layer perceptron in the logarithm-based regressor, and $h_l'$ is a feature (the foregoing second feature) output by the multi-layer perceptron in the logarithm-based regressor. Then, the ReLU function in the logarithm-based regressor may process $h_l'$ according to formula (7).

$$\hat{y}_l = \mathrm{Re}\,LU(h_l') \tag{7}$$

In the foregoing formula, $\hat{y}_l$ is a purchase limit of the user (namely, the foregoing second purchase limit).

In the target model, the classification-based regressor includes a multi-layer perceptron and a softmax function. After receiving $h$, the multi-layer perceptron in the classification-based regressor may process $h$ according to formula (8).

$$h_c = \mathrm{Re}\,LU(w_c h + b_c)$$
$$h_c' = V_c h_c + v_c \tag{8}$$

In the foregoing formula, $w_c$, $b_c$, $V_c$, and $v_c$ are parameters of the multi-layer perceptron in the classification-based regressor, and $h_c'$ is a feature (the foregoing third feature) output by the multi-layer perceptron in the classification-based regressor. Then, the softmax function in the classification-based regressor may process $h_c'$ according to formula (9).

$$\hat{y}_c = soft\max(h_c') \tag{9}$$

In the foregoing formula, $\hat{y}_c$ is a purchase limit of the user (namely, the foregoing third purchase limit).

505: Obtain the predicted purchase limit of the user based on the purchase probability, the first purchase limit, and the second purchase limit.

The purchase probability of the user, the first purchase limit of the user, and the second purchase limit of the user are obtained. The classifier of the target model may send the purchase probability of the user to the fusion device, the first regressor of the target model may send the first purchase limit of the user to the fusion device, and the second regressor of the target model may send the second purchase limit of the user to the fusion device. In this case, the fusion device may calculate the purchase probability, the first purchase limit, and the second purchase limit, to obtain the predicted purchase limit of the user. In this way, purchase prediction on the user is completed.

Specifically, if the target model further includes the third regressor, after obtaining the third purchase limit of the user, the third regressor may send the third purchase limit to the fusion device. Therefore, the fusion device may calculate the purchase probability, the first purchase limit, the second purchase limit, and the third purchase limit, to obtain the predicted purchase limit of the user.

More specifically, the fusion device may obtain the predicted purchase limit of the user in the following manner.

After the purchase probability of the user, the first purchase limit of the user, the second purchase limit of the user, and the third purchase limit of the user are obtained, the fusion device may first perform averaging calculation on the first purchase limit, the second purchase limit, and the third purchase limit, to obtain a fourth purchase limit of the user. Then, the fusion device may perform multiplication calculation on the purchase probability and the fourth purchase limit, to obtain and output the predicted purchase limit of the user.

Still as in the foregoing example, the fusion device may obtain an average value $\hat{y}_a$ of $\hat{y}_d$, $\hat{y}_l$, and $\hat{y}_c$

$$\hat{y}_a = \frac{\hat{y}_d + \hat{y}_l + \hat{y}_c}{3} \qquad\qquad (10)$$

Then, the fusion device multiplies $y'_a$ by $\hat{p}$, to predict a final purchase limit $\hat{y}$ of the user.

$$\hat{y} = \hat{y}_a * \hat{\rho} \qquad\qquad (11)$$

In this case, $\hat{y}$ may be used as a final output of the target model. In this way, purchase prediction on the user is completed.

It should be understood that, in this embodiment, only an example in which the target model includes two or three regressors is used for description, and a quantity of regressors in the target model is not limited. During actual application, the target model may include at least two regressors, for example, two regressors, three regressors, or four regressors. This may be set based on an actual requirement, and is not limited herein.

It should be further understood that, in this embodiment, only an example in which the first regressor is a distribution-based regressor, the second regressor is a logarithm-based regressor, and the third regressor is a classification-based regressor is used for description, and a type of the regressor in the target model is not limited. During actual application, the type of the regressor in the target model may be set based on an actual requirement, and details are not described herein.

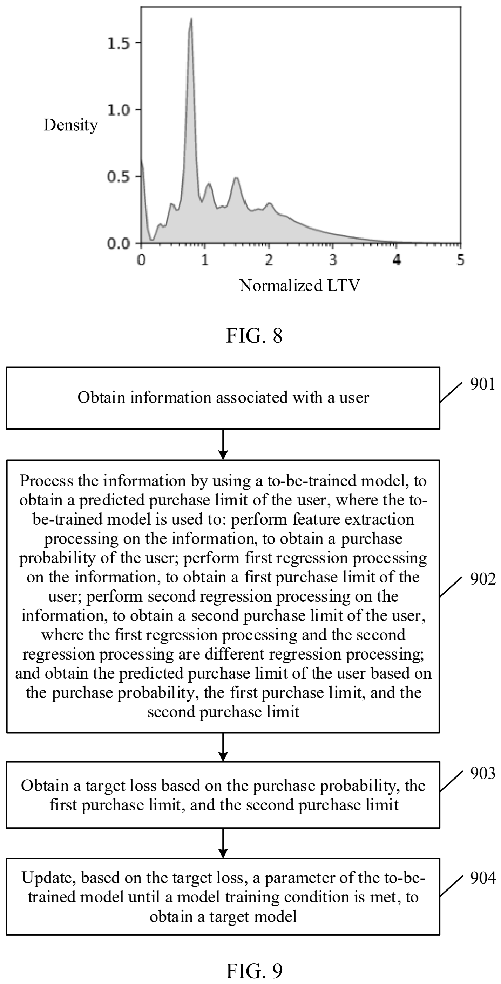

In addition, the target model provided in this embodiment of this application may be tested on a dataset, to obtain a purchase limit statistical distribution of the model on the dataset. The distribution is shown in FIG. 8 (FIG. 8 is a diagram of the statistical distribution according to an embodiment of this application).

Further, the target model (namely, a CMLTV in Table 1) provided in this embodiment of this application and a model (namely, a model other than the CMLTV in Table 1 like Linear and an MLP) provided in a related technology may be compared on the dataset. A comparison result is shown in Table 1.

Table 1

| Methods | All samples | | | Positive samples | |
| --- | --- | --- | --- | --- | --- |
| | RMSE | R2_score | AUC | RMSE | R2_score |
| Linear | 247.16 | 0.01958 | 0.7517 | 1770.4 | 0.02588 |
| MLP | 248.11 | 0.01209 | 0.6549 | 1789 | 0.00538 |
| RF | 248.87 | 0.00599 | 0.7314 | 1803 | 0.01035 |
| XGBoost | 246.4 | 0.02565 | 0.8336 | 1786.3 | 0.00835 |
| ZILN | 242.56 | 0.05576 | 0.8601 | 1713 | 0.07721 |
| MDME | 243.71 | 0.04395 | 0.8482 | 1743.6 | 0.07843 |
| CMLTV | 240.16 | 0.07436 | 0.8629 | 1710.5 | 0.10291 |

It can be learned from Table 1 that the target model achieves optimal performance in regression root mean square errors (root mean squared error, RMSE), decision coefficients (R2_score), and classification (AUC) of all samples and in RMSEs and R2_score of the positive samples in the dataset.

In this embodiment of this application, when purchase prediction needs to be performed on the user, the information associated with the user may be first obtained, and the information is input into the target model. Then, the target model may perform feature extraction processing on the information, to obtain the purchase probability of the user. In addition, the target model may further perform first regression processing on the information, to obtain the first purchase limit of the user, and perform second regression processing on the information, to obtain the second purchase limit of the user. Finally, the target model may process the purchase probability, the first purchase limit, and the second purchase limit, to obtain the predicted purchase limit of the user. In the foregoing process, the first regression processing and the second regression processing are two different types of regression processing. In other words, the target model includes two different regression branches, and two purchase limits of the user can be preliminarily obtained from two different perspectives. In this case, the target model can finally determine the predicted purchase limit of the user based on the two purchase limits. Considered factors in the determining process are comprehensive, so that the predicted purchase limit of the user can have sufficiently high accuracy.

Further, in this embodiment of this application, the target model may further perform third regression processing on the information, to obtain the third purchase limit of the user. In this case, the target model may process the purchase probability, the first purchase limit, the second purchase limit, and the third purchase limit, to obtain the predicted purchase limit of the user. Because the first regression processing, the second regression processing, and the third regression processing are three different types of regression processing. In other words, the target model includes three different regression branches, and three purchase limits of the user can be preliminarily obtained from three different perspectives. In this case, the target model can finally determine the predicted purchase limit of the user based on the three purchase limits. Considered factors in the determining process are more comprehensive, so that the predicted purchase limit of the user can have higher accuracy.

The foregoing describes in detail the purchase prediction method provided in embodiments of this application. The following describes the model training method provided in embodiments of this application. FIG. 9 is a schematic flowchart of a model training method according to an embodiment of this application. As shown in FIG. 9, the method includes the following steps.

901: Obtain information associated with a user.

In this embodiment, when a to-be-trained model needs to be trained, a batch of training data may be first obtained, and the batch of training data includes the information associated with the user. It should be noted that, for the information associated with the user, an actual purchase probability of the user and an actual purchase limit of the user are known.

902: Process the information by using the to-be-trained model, to obtain a predicted purchase limit of the user, where the to-be-trained model is used to: perform feature extraction processing on the information, to obtain a purchase probability of the user; perform first regression processing on the information, to obtain a first purchase limit of the user; perform second regression processing on the information, to obtain a second purchase limit of the user, where the first regression processing and the second regression processing are different regression processing; and obtain the predicted purchase limit of the user based on the purchase probability, the first purchase limit, and the second purchase limit.

After the information associated with the user is obtained, the information may be input into the to-be-trained model, to perform a series of processing on the information by using the to-be-trained model, to obtain the predicted purchase limit of the user. Then, the to-be-trained model may first perform feature extraction processing on the information, to obtain the purchase probability of the user. In addition, the to-be-trained model may further perform first regression processing on the information, to obtain the first purchase limit of the user, and perform second regression processing on the information, to obtain the second purchase limit of the user. The first regression processing and the second regression processing are different regression processing. Finally, the to-be-trained model may obtain the predicted purchase limit of the user based on the purchase probability, the first purchase limit, and the second purchase limit.

In a possible implementation, the to-be-trained model is further used to perform third regression processing on the information, to obtain a third purchase limit of the user, where the first regression processing, the second regression processing, and the third regression processing are different regression processing. The to-be-trained model is used to obtain the predicted purchase limit of the user based on the purchase probability, the first purchase limit, the second purchase limit, and the third purchase limit.

In a possible implementation, the obtaining the target loss based on the purchase probability, the first purchase limit, the second purchase limit, and the third purchase limit includes: obtaining the target loss based on the purchase probability, an actual purchase probability of the user, the first purchase limit, the second purchase limit, the third purchase limit, and an actual purchase limit of the user.

In a possible implementation, the to-be-trained model is used to: process the information based on a first multi-layer perceptron, to obtain a first feature of the information; construct a target distribution based on the first feature, where the target distribution indicates a correspondence between a plurality of purchase limits and a plurality of purchase probabilities; and perform averaging processing on the plurality of purchase limits indicated by the target distribution, to obtain the first purchase limit of the user.

In a possible implementation, the to-be-trained model is used to: process the information based on a second multi-layer perceptron, to obtain a second feature of the information; and perform linear rectification processing on the second feature, to obtain the second purchase limit of the user.

In a possible implementation, the to-be-trained model is used to: process the information based on a third multi-layer perceptron, to obtain a third feature of the information; and perform normalization processing on the third feature, to obtain the third purchase limit of the user.

In a possible implementation, the to-be-trained model is used to: process the information based on a fourth multi-layer perceptron, to obtain a fourth feature of the information; and perform mapping processing on the fourth feature, to obtain the purchase probability of the user.

In a possible implementation, the to-be-trained model is used to: perform averaging processing on the first purchase limit, the second purchase limit, and the third purchase limit, to obtain a fourth purchase limit; and perform multiplication processing on the purchase probability and the fourth purchase limit, to obtain the predicted purchase limit of the user.

It should be noted that, for descriptions of step 902, refer to related descriptions of step 502 to step 505 in the embodiment shown in FIG. 5. Details are not described herein again.

903: Obtain a target loss based on the purchase probability, the first purchase limit, and the second purchase limit.

After the purchase probability of the user, the first purchase limit of the user, and the second purchase limit of the user are obtained, the purchase probability, the first purchase limit, and the second purchase limit may be calculated, to obtain the target loss.

Specifically, if the to-be-trained model not only obtains the purchase probability of the user, the first purchase limit of the user, and the second purchase limit of the user, but also obtains the third purchase limit of the user, in this case, the purchase probability, the first purchase limit, the second purchase limit, and the third purchase limit may be calculated, to obtain the target loss.

More specifically, the purchase probability, the first purchase limit, the second purchase limit, and the third purchase limit may be calculated in the following manner, to obtain the target loss:

(1) calculating the purchase probability of the user and the actual purchase probability of the user, to obtain the first loss;
(2) calculating the first purchase limit of the user and the actual purchase limit of the user, to obtain a second loss;
(3) calculating the second purchase limit of the user and the actual purchase limit of the user, to obtain a third loss;
(4) calculating the third purchase limit of the user and the actual purchase limit of the user, to obtain a fourth loss;
(5) calculating the purchase probability of the user, to obtain a fifth loss;
(6) calculating the purchase probability of the user and the first purchase limit of the user, to obtain a sixth loss;
(7) calculating the purchase probability of the user and the second purchase limit of the user, to obtain a seventh loss;
(8) calculating the purchase probability of the user and the third purchase limit of the user, to obtain an eighth loss; and
(9) adding the first loss, the second loss, the third loss, the fourth loss, the fifth loss, the sixth loss, the seventh loss, and the eighth loss, to obtain the target loss.

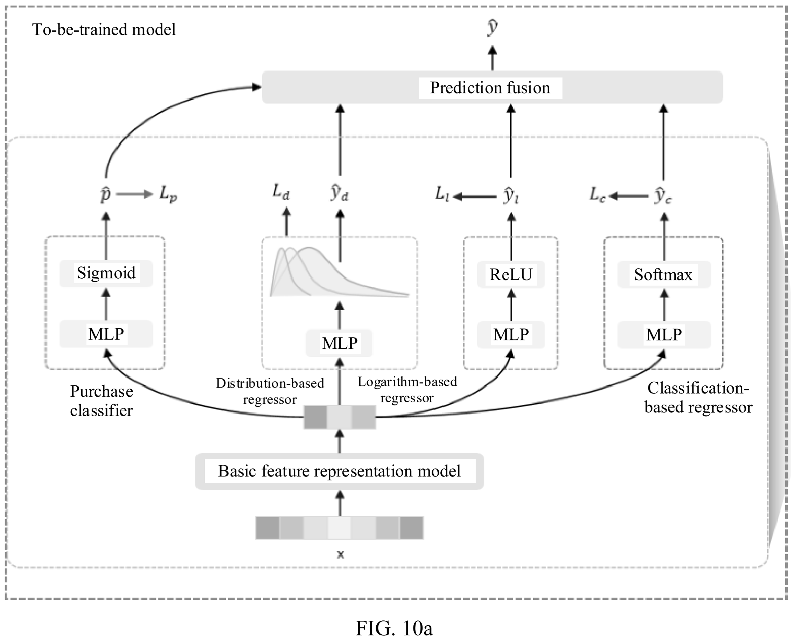

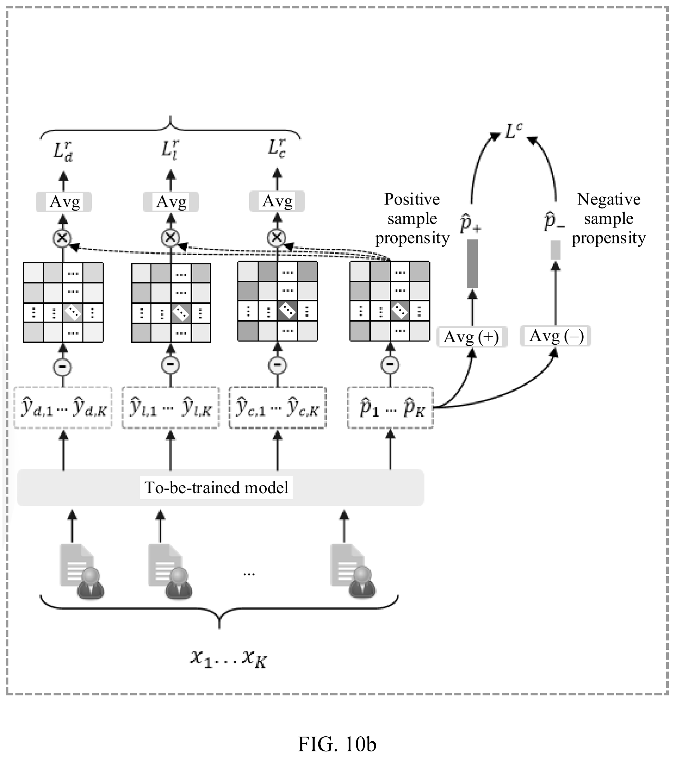

Still as shown in the foregoing example, FIG. 10a and FIG. 10b (FIG. 10a is a diagram of a structure of a model training framework according to an embodiment of this application, FIG. 10b is another diagram of a structure of a model training framework according to an embodiment of this application, and FIG. 10a and FIG. 10b are obtained through drawing based on FIG. 7). It is assumed that any piece of information associated with the user in a batch of training data is $x$, and after the to-be-trained model processes $x$ (for a processing process, refer to the example shown in FIG. 7, and details are not described herein again), $\hat{p}$, $\hat{y}_d$, $\hat{y}_l$, and $\hat{y}_c$ may be obtained.

In this case, $\hat{p}$, $\hat{y}_d$, $\hat{y}_l$ and $\hat{y}_c$ may be calculated by using the following formula:

$$L_p = -z \log \hat{p} - (1-z)\log(1-\hat{p})$$
$$L_d = -\log f(y)$$
$$L_l = (\hat{y}_l - \lg(1+y))^2$$
$$L_c = \sum_t^c c_t \log \hat{y}_c^t, c = \left| \log_2(1+y) \right| \tag{12}$$
$$\hat{y}_c' = \sum_t^c \frac{(2^t - 1 + 2^{t+1} - 2)}{2} \hat{y}_c^t = \sum_t^c \frac{(2^t + 2^{t+1} - 3)}{2} \hat{y}_c^t$$

In the foregoing formula, for $x$, $z$ corresponds to $x$ and is an actual purchase probability of the user, $y$ corresponds to $x$ and is an actual purchase limit of the user, and $\hat{y}_c'$ is obtained by reconstructing $\hat{y}_c$.

It is assumed that the batch of training data input into the to-be-trained model includes K pieces of information $[x_1,...,x_K]$ associated with the user, after the to-be-trained model processes $[x_1,...,x_K]$, $[\hat{p}_1,...,\hat{p}_K]$, $[\hat{y}_{d,1},...,\hat{y}_{d,K}]$, $[\hat{y}_{l,1},...,\hat{y}_{l,K}]$ and $[\hat{y}_{c,1},...,\hat{y}_{c,K}]$ may be correspondingly obtained. $[\hat{p}_1,...,\hat{p}_K]$, $[\hat{y}_{d,1},...,\hat{y}_{d,K}]$, $[\hat{y}_{l,1},...,\hat{y}_{l,K}]$, and $[\hat{y}_{c,1},...,\hat{y}_{c,K}]$ are separately processed according to formula (12), to obtain $[L_{p,1},...,L_{p,K}]$, $[L_{d,1},...,L_{d,K}]$, $[L_{l,1},...,L_{l,K}]$, and $[L_{c,1},...,L_{c,K}]$. In this way, a loss

$L_p' = L_{p,1} + ... + L_{p,K}$ , a loss $L_d' = L_{d,1} + ... + L_{d,K}$ , a loss $L_l' = L_{l,1} + ... + L_{l,K}$ , a loss $L_c' = L_{c,1} + ... + L_{c,K}$ can be obtained through calculation.

Further, $[\hat{p}_1,..., \hat{p}_K]$, $[\hat{y}_{d,1},..., \hat{y}_{d,K}]$, $[\hat{y}_{l,1},..., \hat{y}_{l,K}]$, and $[\hat{y}_{c,1},..., \hat{y}_{c,K}]$ may be further processed by using the following formula:

$$L^c = -\log \sigma[\sigma^{-1}(\hat{p}_+) - \sigma^{-1}(\hat{p}_-)]$$

$$L_d^r = -\frac{1}{K^2} \sum_{i=1}^{K} \sum_{j=1}^{K} (\hat{p}_i - \hat{p}_j)[\lg(1+\hat{y}_{d,i}) - \lg(1+\hat{y}_{d,j})]$$

$$L_l^r = -\frac{1}{K^2} \sum_{i=1}^{K} \sum_{j=1}^{K} (\hat{p}_i - \hat{p}_j)[\lg(1+\hat{y}_{l,i}) - \lg(1+\hat{y}_{l,j})]$$ 
\hfill (13)

$$L_c^r = -\frac{1}{K^2} \sum_{i=1}^{K} \sum_{j=1}^{K} (\hat{p}_i - \hat{p}_j)[\lg(1+\hat{y}_{c,i}) - \lg(1+\hat{y}_{c,j})]$$

In the foregoing formula, $\hat{p}_+$ is an average value of predicted purchase probabilities that are of the user and that correspond to all positive samples (that is, actual purchase probabilities that are of the user and that correspond to these samples are 1) in the K pieces of information (namely, K samples), and $\hat{p}_-$ is an average value of predicted purchase probabilities that are of the user and that correspond to all positive samples (that is, actual purchase probabilities that are of the user and that correspond to these samples are 0) in the K pieces of information.

Finally, the target loss may be calculated by using the following formula:

$$L = L_p' + L_d' + L_l' + L_c' + L^c + L_d^r + L_l^r + L_c^r$$
\hfill (14)

904: Update, based on the target loss, a parameter of the to-be-trained model until a model training condition is met, to obtain a target model.

After the target loss is obtained, the parameter of the to-be-trained model may be updated by using the target loss, to obtain the to-be-trained model of which the parameter is updated. Then, the to-be-trained model of which the parameter is updated may continue to be trained by using a next batch of training data, until the model training condition (for example, target loss convergence) is met, to obtain the target model in the embodiment shown in FIG. 5.

The target model obtained through training in this embodiment of this application has a function of purchase prediction. Specifically, when purchase prediction needs to be performed on the user, the information associated with the user may be first obtained, and the information is input into the target model. Then, the target model may perform feature extraction processing on the information, to obtain the purchase probability of the user. In addition, the target model may further perform first regression processing on the information, to obtain the first purchase limit of the user, and perform second regression processing on the information, to obtain the second purchase limit of the user. Finally, the target model may process the purchase probability, the first purchase limit, and the second purchase limit, to obtain the predicted purchase limit of the user. In the foregoing process, the first regression processing and the second regression processing are two different types of regression processing. In other words, the target model includes two different regression branches, and two purchase limits of the user can be preliminarily obtained from two different perspectives. In this case, the target model can finally determine the predicted purchase limit of the user based on the two purchase limits. Considered factors in the determining process are comprehensive, so that the predicted purchase limit of the user can have sufficiently high accuracy.

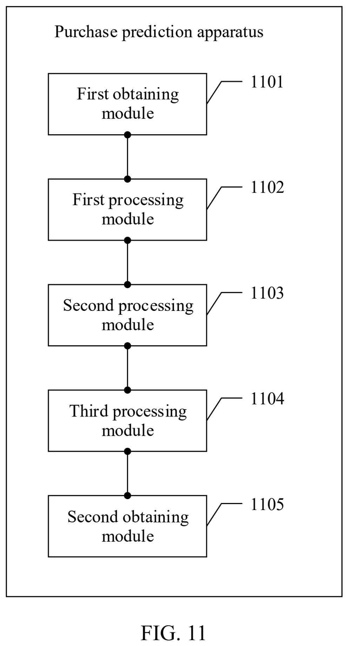

The foregoing describes in detail the model training method provided in embodiments of this application. The following describes a purchase prediction apparatus and a model training apparatus provided in embodiments of this application. FIG. 11 is a diagram of a structure of a purchase prediction apparatus according to an embodiment of this application. As shown in FIG. 11, the apparatus includes a target model, and the apparatus includes:

a first obtaining module 1101, configured to obtain information associated with a user;

a first processing module 1102, configured to perform feature extraction processing on the information, to obtain a purchase probability of the user;

a second processing module 1103, configured to perform first regression processing on the information, to obtain a first purchase limit of the user;

a third processing module 1104, configured to perform second regression processing on the information, to obtain a second purchase limit of the user, where the first regression processing and the second regression processing are different regression processing; and

a second obtaining module 1105, configured to obtain a predicted purchase limit of the user based on the purchase probability, the first purchase limit, and the second purchase limit.

In this embodiment of this application, when purchase prediction needs to be performed on the user, information associated with the user may be first obtained, and the information is input into the target model. Then, the target model may perform feature extraction processing on the information, to obtain the purchase probability of the user. In addition, the target model may further perform first regression processing on the information, to obtain the first purchase limit of the user, and perform second regression processing on the information, to obtain the second purchase limit of the user. Finally, the target model may process the purchase probability, the first purchase limit, and the second purchase limit, to obtain the predicted purchase limit of the user. In the foregoing process, the first regression processing and the second regression processing are two different types of regression processing. In other words, the target model includes two different regression branches, and two purchase limits of the user can be preliminarily obtained from two different perspectives. In this case, the target model can finally determine the predicted purchase limit of the user based on the two purchase limits. Considered factors in the determining process are comprehensive, so that the predicted purchase limit of the user can have sufficiently high accuracy.

In a possible implementation, the apparatus further includes: a fourth processing module, configured to perform third regression processing on the information, to obtain a third purchase limit of the user, where the first regression processing, the second regression processing, and the third regression processing are different regression processing; and the second obtaining module 1105, configured to obtain the predicted purchase limit of the user based on the purchase probability, the first purchase limit, the second purchase limit, and the third purchase limit.

In a possible implementation, the second processing module 1103 is configured to: process the information based on a first multi-layer perceptron, to obtain a first feature of the information; construct a target distribution based on the first feature, where the target distribution indicates a correspondence between a plurality of purchase limits and a plurality of purchase probabilities; and perform averaging processing on the plurality of purchase limits indicated by the target distribution, to obtain the first purchase limit of the user.

In a possible implementation, the third processing module 1104 is configured to: process the information based on a second multi-layer perceptron, to obtain a second feature of the information; and perform linear rectification processing on the second feature, to obtain the second purchase limit of the user.

In a possible implementation, the fourth processing module is configured to: process the information based on a third multi-layer perceptron, to obtain a third feature of the information; and perform normalization processing on the third feature, to obtain the third purchase limit of the user.

In a possible implementation, the first processing module 1102 is configured to: process the information based on a fourth multi-layer perceptron, to obtain a fourth feature of the information; and perform mapping processing on the fourth feature, to obtain the purchase probability of the user.

In a possible implementation, the second obtaining module 1105 is configured to: perform averaging processing on the first purchase limit, the second purchase limit, and the third purchase limit, to obtain a fourth purchase limit; and perform multiplication processing on the purchase probability and the fourth purchase limit, to obtain the predicted purchase limit of the user.

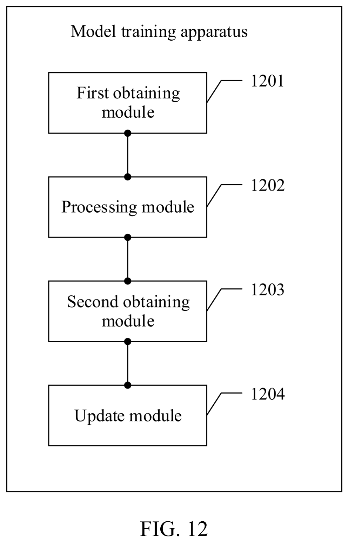

FIG. 12 is a diagram of a structure of a model training apparatus according to an embodiment of this application. As shown in FIG. 12, the apparatus includes:

a first obtaining module 1201, configured to obtain information associated with a user;

a processing module 1202, configured to process the information by using a to-be-trained model, to obtain a predicted purchase limit of the user, where the to-be-trained model is used to: perform feature extraction processing on the information, to obtain a purchase probability of the user; perform first regression processing on the information, to obtain a first purchase limit of the user; perform second regression processing on the information, to obtain a second purchase limit of the user, where the first regression processing and the second regression processing are different regression processing; and obtain the predicted purchase limit of the user based on the purchase probability, the first purchase limit, and the second purchase limit;

a second obtaining module 1203, configured to obtain a target loss based on the purchase probability, the first purchase limit, and the second purchase limit; and

an update module 1204, configured to update, based on the target loss, a parameter of the to-be-trained model until a model training condition is met, to obtain a target model.

The target model obtained through training in this embodiment of this application has a function of purchase prediction. Specifically, when purchase prediction needs to be performed on the user, the information associated with the user may be first obtained, and the information is input into the target model. Then, the target model may perform feature extraction processing on the information, to obtain the purchase probability of the user. In addition, the target model may further perform first regression processing on the information, to obtain the first purchase limit of the user, and perform second regression processing on the information, to obtain the second purchase limit of the user. Finally, the target model may process the purchase probability, the first purchase limit, and the second purchase limit, to obtain the predicted purchase limit of the user. In the foregoing process, the first regression processing and the second regression processing are two different types of regression processing. In other words, the target model includes two different regression branches, and two purchase limits of the user can be preliminarily obtained from two different perspectives. In this case, the target model can finally determine the predicted purchase limit of the user based on the two purchase limits. Considered factors in the determining process are comprehensive, so that the predicted purchase limit of the user can have sufficiently high accuracy.

In a possible implementation, the to-be-trained model is further used to perform third regression processing on the information, to obtain a third purchase limit of the user, where the first regression processing, the second regression processing, and the third regression processing are different regression processing. The to-be-trained model is used to obtain the predicted purchase limit of the user based on the purchase probability, the first purchase limit, the second purchase limit, and the third purchase limit. The update module 1204 is configured to obtain the target loss based on the purchase probability, the first purchase limit, the second purchase limit, and the third purchase limit.

In a possible implementation, the update module 1204 is configured to obtain the target loss based on the purchase probability, an actual purchase probability of the user, the first purchase limit, the second purchase limit, the third purchase limit, and an actual purchase limit of the user.

In a possible implementation, the to-be-trained model is used to: process the information based on a first multi-layer perceptron, to obtain a first feature of the information; construct a target distribution based on the first feature, where the target distribution indicates a correspondence between a plurality of purchase limits and a plurality of purchase probabilities; and perform averaging processing on the plurality of purchase limits indicated by the target distribution, to obtain the first purchase limit of the user.

In a possible implementation, the to-be-trained model is used to: process the information based on a second multi-layer perceptron, to obtain a second feature of the information; and perform linear rectification processing on the second feature, to obtain the second purchase limit of the user.

In a possible implementation, the to-be-trained model is used to: process the information based on a third multi-layer perceptron, to obtain a third feature of the information; and perform normalization processing on the third feature, to obtain the third purchase limit of the user.

In a possible implementation, the to-be-trained model is used to: process the information based on a fourth multi-layer perceptron, to obtain a fourth feature of the information; and perform mapping processing on the fourth feature, to obtain the purchase probability of the user.

In a possible implementation, the to-be-trained model is used to: perform averaging processing on the first purchase limit, the second purchase limit, and the third purchase limit, to obtain a fourth purchase limit; and perform multiplication processing on the purchase probability and the fourth purchase limit, to obtain the predicted purchase limit of the user.

It should be noted that, content such as information exchange between the modules/units of the apparatuses and an execution process is based on the same concept as the method embodiments of this application, and produces the same technical effect as the method embodiments of this application. For specific content, refer to the foregoing descriptions in the method embodiments of this application. Details are not described herein again.

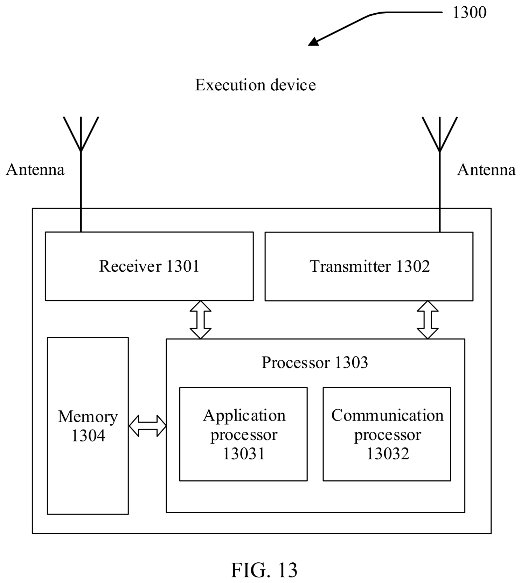

An embodiment of this application further relates to an execution device. FIG. 13 is a diagram of a structure of an execution device according to an embodiment of this application. As shown in FIG. 13, an execution device 1300 may be specifically represented as a mobile phone, a tablet computer, a notebook computer, an intelligent wearable device, a server, or the like. This is not limited herein. The purchase prediction apparatus described in the embodiment corresponding to FIG. 11 may be deployed on the execution device 1300, and is configured to implement the purchase prediction function in the embodiment corresponding to FIG. 5. Specifically, the execution device 1300 includes a receiver 1301, a transmitter 1302, a processor 1303, and a memory 1304 (there may be one or more processors 1303 in the execution device 1300, and one processor is used as an example in FIG. 13). The processor 1303 may include an application processor 13031 and a communication processor 13032. In some embodiments of this application, the receiver 1301, the transmitter 1302, the processor 1303, and the memory 1304 may be connected through a bus or in another manner.

The memory 1304 may include a read-only memory and a random access memory, and provide instructions and data to the processor 1303. A part of the memory 1304 may further include a non-volatile random access memory (non-volatile random access memory, NVRAM). The memory 1304 stores operation instructions of the processor, an executable module or a data structure, a subset thereof, or an extended set thereof. The operation instructions may include various operation instructions used to implement various operations.

The processor 1303 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in embodiments of this application may be applied to the processor 1303, or implemented by the processor 1303. The processor 1303 may be an integrated circuit chip and has a signal processing capability. In an implementation process, steps of the foregoing method may be completed by using an integrated logic circuit of hardware in the processor 1303 or instructions in a form of software. The processor 1303 may be a general-purpose processor, a digital signal processor (digital signal processing, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1303 may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1304, and the processor 1303 reads information in the memory 1304 and completes the steps in the foregoing methods in combination with hardware of the processor 1303.

The receiver 1301 may be configured to: receive input digital or character information, and generate a signal input related to related setting and function control of the execution device. The transmitter 1302 may be configured to output digital or character information through a first interface. The transmitter 1302 may be further configured to send instructions to a disk group through the first interface, to modify data in the disk group. The transmitter 1302 may further include a display device like a display.

In this embodiment of this application, in one case, the processor 1303 is configured to obtain a purchase limit of a user by using the target model in the embodiment corresponding to FIG. 5.

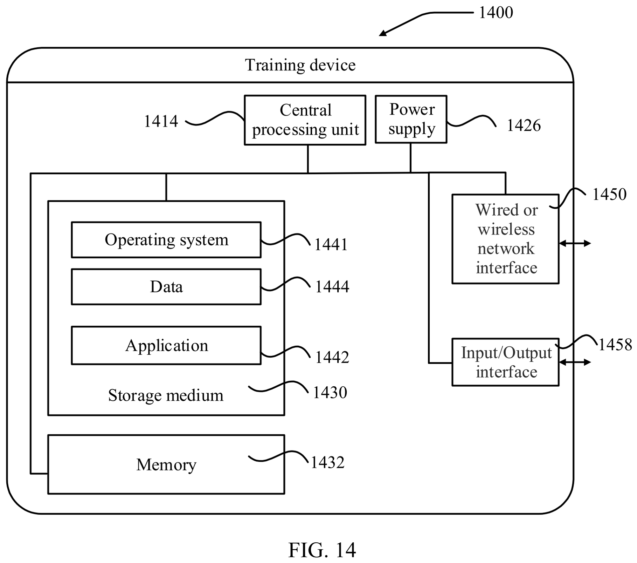

An embodiment of this application further relates to a training device. FIG. 14 is a diagram of a structure of a training device according to an embodiment of this application. As shown in FIG. 14, the training device 1400 is implemented by one or more servers. The training device 1400 may vary greatly due to different configurations or performance, and may include one or more central processing units (central processing unit, CPU) 1414 (for example, one or more processors), a memory 1432, and one or more storage media 1430 (for example, one or more mass storage devices) that store an application 1442 or data 1444. The memory 1432 and the storage medium 1430 may be transient storage or persistent storage. A program stored in the storage medium 1430 may include one or more modules (not shown in the figure), and each module may include a series of instruction operations for the training device. Further, the central processing unit 1414 may be configured to communicate with the storage medium 1430, and perform, on the training device 1400, the series of instruction operations in the storage medium 1430.

The training device 1400 may further include one or more power supplies 1426, one or more wired or wireless network interfaces 1450, one or more input/output interfaces 1458, or one or more operating systems 1441 such as Windows Server™, Mac OS X™, Unix™, Linux™, and FreeBSD™.

Specifically, the training device may perform the model training method in the embodiment corresponding to FIG. 9.

An embodiment of this application further relates to a computer storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a cache; or the storage unit may be a storage unit that is in the radio access device end and that is located outside the chip, for example, a read-only memory (read-only memory, ROM), another type of static storage device that can store static information and instructions, or a random access memory (random access memory, RAM).

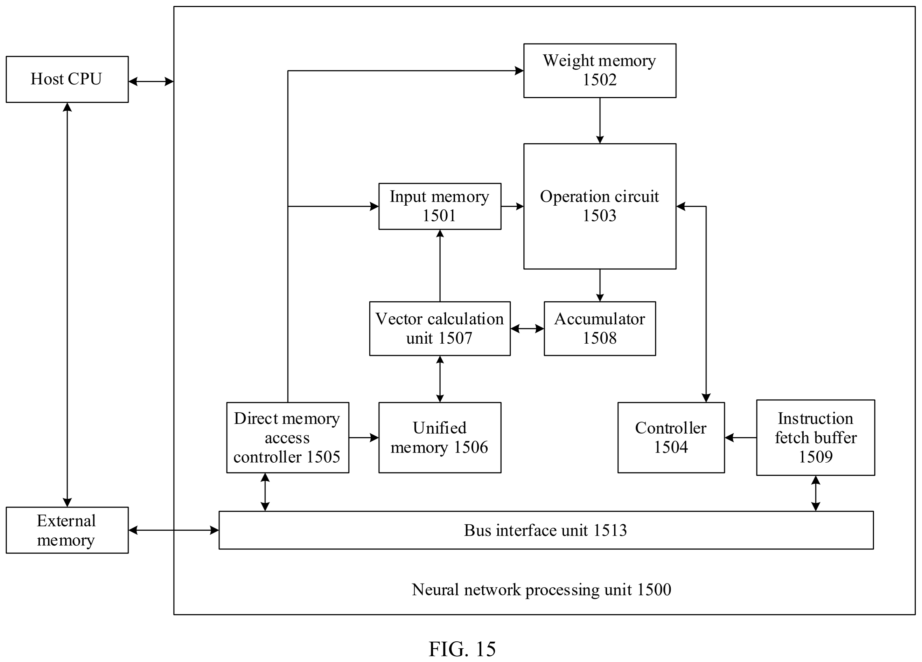

Specifically, FIG. 15 is a diagram of a structure of a chip according to an embodiment of this application. The chip may be represented as a neural network processing unit NPU 1500. The NPU 1500 is mounted to a host CPU (Host CPU) as a coprocessor. The host CPU allocates a task. A core part of the NPU is an operation circuit 1503, and a controller 1504 controls the operation circuit 1503 to extract matrix data in a memory and perform a multiplication operation.

In some implementations, the operation circuit 1503 includes a plurality of process engines (Process Engine, PE). In some implementations, the operation circuit 1503 is a two-dimensional systolic array. The operation circuit 1503 may alternatively be a one-dimensional systolic array or another electronic circuit that can perform mathematical operations such as multiplication and addition. In some implementations, the operation circuit 1503 is a general-purpose matrix processor.

For example, it is assumed that there is an input matrix A, a weight matrix B, and an output matrix C. The operation circuit fetches, from a weight memory 1502, data corresponding to the matrix B, and caches the data on each PE in the operation circuit. The operation circuit fetches data of the matrix A from an input memory 1501, performs a matrix operation with the matrix B, and stores an obtained partial result or an obtained final result of the matrix in an accumulator (accumulator) 1508.

A unified memory 1506 is configured to store input data and output data. Weight data is directly transferred to the weight memory 1502 by using a direct memory access controller (Direct Memory Access Controller, DMAC) DMAC 1505. The input data is also transferred to the unified memory 1506 by using the DMAC.

A BIU is a bus interface unit, namely, a bus interface unit 1513, and is configured for interaction between an AXI bus and each of the DMAC and an instruction fetch buffer (Instruction Fetch Buffer, IFB) 1509.

The bus interface unit (Bus Interface Unit, BIU for short) 1513 is used by the instruction fetch buffer 1509 to obtain instructions from an external memory, and is further used by the direct memory access controller 1505 to obtain original data of the input matrix A or the weight matrix B from the external memory.

The DMAC is mainly configured to transfer input data in the external memory DDR to the unified memory 1506, transfer weight data to the weight memory 1502, or transfer input data to the input memory 1501.

A vector calculation unit 1507 includes a plurality of operation processing units. If required, further processing is performed on an output of the operation circuit 1503, for example, vector multiplication, vector addition, an exponential operation, a logarithmic operation, and size comparison. The vector calculation unit 1507 is mainly configured to perform network calculation at a non-convolutional/fully connected layer in a neural network, for example, batch normalization (batch normalization), pixel-level summation, and upsampling of a predicted label plane.

In some implementations, the vector calculation unit 1507 can store a processed output vector in the unified memory 1506. For example, the vector calculation unit 1507 may apply a linear function or a non-linear function to the output of the operation circuit 1503, for example, perform linear interpolation on a predicted label plane extracted from a convolutional layer, and for another example, obtain a vector of an accumulated value to generate an activation value. In some implementations, the vector calculation unit 1507 generates a normalized value, a pixel-level summation value, or both. In some implementations, the processed output vector can be used as an activation input to the operation circuit 1503. For example, the processed output vector can be used at a subsequent layer of the neural network.

The instruction fetch buffer (instruction fetch buffer) 1509 connected to the controller 1504 is configured to store instructions used by the controller 1504.

The unified memory 1506, the input memory 1501, the weight memory 1502, and the instruction fetch buffer 1509 are all on-chip memories. The external memory is private to a hardware architecture of the NPU.

Any one of the foregoing processors may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected based on an actual requirement to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or may certainly be implemented by dedicated hardware, including an application-specific integrated circuit, a dedicated CPU, a dedicated memory, a dedicated component, and the like. Generally, any function that can be completed by a computer program can be easily implemented by using corresponding hardware. Moreover, a specific hardware structure used to implement a same function may be in various forms, for example, in a form of analog circuit, digital circuit, or dedicated circuit. However, in this application, a software program implementation is a better implementation in most cases. Based on such an understanding, the technical solutions of this application essentially or the part contributing to the conventional technology may be implemented in a form of software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by software, hardware, firmware, or any combination thereof. When software is used to implement embodiments, all or a part of embodiments may be implemented in a form of computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from one website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device like a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A purchase prediction method, wherein the method is implemented by using a target model, and the method comprises:

   obtaining information associated with a user;
   performing feature extraction processing on the information, to obtain a purchase probability of the user;
   performing first regression processing on the information, to obtain a first purchase limit of the user;
   performing second regression processing on the information, to obtain a second purchase limit of the user, wherein the first regression processing and the second regression processing are different regression processing; and
   obtaining a predicted purchase limit of the user based on the purchase probability, the first purchase limit, and the second purchase limit.

2. The method according to claim 1, wherein the method further comprises:

   performing third regression processing on the information, to obtain a third purchase limit of the user, wherein the first regression processing, the second regression processing, and the third regression processing are different regression processing; and
   the obtaining a predicted purchase limit of the user based on the purchase probability, the first purchase limit, and the second purchase limit comprises:
   obtaining the predicted purchase limit of the user based on the purchase probability, the first purchase limit, the second purchase limit, and the third purchase limit.

3. The method according to claim 1 or 2, wherein the performing first regression processing on the information, to obtain a first purchase limit of the user comprises:

   processing the information based on a first multi-layer perceptron, to obtain a first feature of the information;
   constructing a target distribution based on the first feature, wherein the target distribution indicates a correspondence between a plurality of purchase limits and a plurality of purchase probabilities; and
   performing averaging processing on the plurality of purchase limits indicated by the target distribution, to obtain the first purchase limit of the user.

4. The method according to any one of claims 1 to 3, wherein the performing second regression processing on the information, to obtain a second purchase limit of the user comprises:

   processing the information based on a second multi-layer perceptron, to obtain a second feature of the information; and
   performing linear rectification processing on the second feature, to obtain the second purchase limit of the user.

5. The method according to claim 2, wherein the performing third regression processing on the information, to obtain a third purchase limit of the user comprises:

processing the information based on a third multi-layer perceptron, to obtain a third feature of the information; and performing normalization processing on the third feature, to obtain the third purchase limit of the user.

6. The method according to claim 2 or 5, wherein the obtaining the predicted purchase limit of the user based on the purchase probability, the first purchase limit, the second purchase limit, and the third purchase limit comprises:

performing averaging processing on the first purchase limit, the second purchase limit, and the third purchase limit, to obtain a fourth purchase limit; and
performing multiplication processing on the purchase probability and the fourth purchase limit, to obtain the predicted purchase limit of the user.

7. A model training method, wherein the method comprises:

obtaining information associated with a user;
processing the information by using a to-be-trained model, to obtain a predicted purchase limit of the user, wherein the to-be-trained model is used to: perform feature extraction processing on the information, to obtain a purchase probability of the user; perform first regression processing on the information, to obtain a first purchase limit of the user; perform second regression processing on the information, to obtain a second purchase limit of the user, wherein the first regression processing and the second regression processing are different regression processing; and obtain the predicted purchase limit of the user based on the purchase probability, the first purchase limit, and the second purchase limit;
obtaining a target loss based on the purchase probability, the first purchase limit, and the second purchase limit; and
updating, based on the target loss, a parameter of the to-be-trained model until a model training condition is met, to obtain a target model.

8. The method according to claim 7, wherein the to-be-trained model is further used to perform third regression processing on the information, to obtain a third purchase limit of the user, wherein the first regression processing, the second regression processing, and the third regression processing are different regression processing;

the to-be-trained model is used to obtain the predicted purchase limit of the user based on the purchase probability, the first purchase limit, the second purchase limit, and the third purchase limit; and
the obtaining a target loss based on the purchase probability, the first purchase limit, and the second purchase limit comprises:
obtaining the target loss based on the purchase probability, the first purchase limit, the second purchase limit, and the third purchase limit.

9. The method according to claim 8, wherein the obtaining the target loss based on the purchase probability, the first purchase limit, the second purchase limit, and the third purchase limit comprises:
obtaining the target loss based on the purchase probability, an actual purchase probability of the user, the first purchase limit, the second purchase limit, the third purchase limit, and an actual purchase limit of the user.

10. The method according to any one of claims 7 to 9, wherein the to-be-trained model is used to:

process the information based on a first multi-layer perceptron, to obtain a first feature of the information;
construct a target distribution based on the first feature, wherein the target distribution indicates a correspondence between a plurality of purchase limits and a plurality of purchase probabilities; and
perform averaging processing on the plurality of purchase limits indicated by the target distribution, to obtain the first purchase limit of the user.

11. The method according to any one of claims 7 to 10, wherein the to-be-trained model is used to:

process the information based on a second multi-layer perceptron, to obtain a second feature of the information; and
perform linear rectification processing on the second feature, to obtain the second purchase limit of the user.

12. The method according to claim 8 or 9, wherein the to-be-trained model is used to:

process the information based on a third multi-layer perceptron, to obtain a third feature of the information; and perform normalization processing on the third feature, to obtain the third purchase limit of the user.

13. The method according to claim 8, 9, or 12, wherein the to-be-trained model is used to:

perform averaging processing on the first purchase limit, the second purchase limit, and the third purchase limit, to obtain a fourth purchase limit; and
perform multiplication processing on the purchase probability and the fourth purchase limit, to obtain the predicted purchase limit of the user.

14. A purchase prediction apparatus, wherein the apparatus comprises a target model, and the apparatus comprises:

a first obtaining module, configured to obtain information associated with a user;
a first processing module, configured to perform feature extraction processing on the information, to obtain a purchase probability of the user;
a second processing module, configured to perform first regression processing on the information, to obtain a first purchase limit of the user;
a third processing module, configured to perform second regression processing on the information, to obtain a second purchase limit of the user, wherein the first regression processing and the second regression processing are different regression processing; and
a second obtaining module, configured to obtain a predicted purchase limit of the user based on the purchase probability, the first purchase limit, and the second purchase limit.

15. A model training apparatus, wherein the apparatus comprises:

a first obtaining module, configured to obtain information associated with a user;
a processing module, configured to process the information by using a to-be-trained model, to obtain a predicted purchase limit of the user, wherein the to-be-trained model is used to: perform feature extraction processing on the information, to obtain a purchase probability of the user; perform first regression processing on the information, to obtain a first purchase limit of the user; perform second regression processing on the information, to obtain a second purchase limit of the user, wherein the first regression processing and the second regression processing are different regression processing; and obtain the predicted purchase limit of the user based on the purchase probability, the first purchase limit, and the second purchase limit;
a second obtaining module, configured to obtain a target loss based on the purchase probability, the first purchase limit, and the second purchase limit; and
an update module, configured to update, based on the target loss, a parameter of the to-be-trained model until a model training condition is met, to obtain a target model.

16. A purchase prediction apparatus, wherein the apparatus comprises a memory and a processor, the memory stores code, the processor is configured to execute the code, and when the code is executed, the purchase prediction apparatus performs the method according to any one of claims 1 to 13.

17. A computer storage medium, wherein the computer storage medium stores one or more instructions, and when the instructions are executed by one or more computers, the one or more computers are enabled to implement the method according to any one of claims 1 to 13.

18. A computer program product, wherein the computer program product stores instructions, and when the instructions are executed by a computer, the computer is enabled to implement the method according to any one of claims 1 to 13.

FIG. 1

Interaction interface

Information associated with a user

Processing result of the information

Searching/ Inference/ Decision-making

Data training/Machine learning/Deep learning

Processor

Memory

Data processing device (server)

13:21

FIG. 2a

FIG. 2b

EP 4 685 723 A1

300

Data storage system 250

Execution device 210

...

Communication network

Local device 301

Local device 302

Examples

FIG. 2c

FIG. 3

Purchase limit
of the user

Target model

Fusion device

Classifier

First
regressor

Second
regressor

Information
associated
with a user

FIG. 4

Obtain information associated with a user — 501

Perform feature extraction processing on the information, to obtain a purchase probability of the user — 502

Perform first regression processing on the information, to obtain a first purchase limit of the user — 503

Perform second regression processing on the information, to obtain a second purchase limit of the user, where the first regression processing and the second regression processing are different regression processing — 504

Obtain a predicted purchase limit of the user based on the purchase probability, the first purchase limit, and the second purchase limit — 505

FIG. 5

Purchase limit of the user

Target model

Fusion device

Third regressor

Normalization module

Third MLP

Second regressor

Linear rectification module

Second MLP

First regressor

Construction module

First MLP

Classifier

Mapping module

Fourth MLP

Information associated with a user

FIG. 6

FIG. 7

FIG. 8

| Obtain information associated with a user | 901 |

Process the information by using a to-be-trained model, to obtain a predicted purchase limit of the user, where the to-be-trained model is used to: perform feature extraction processing on the information, to obtain a purchase probability of the user; perform first regression processing on the information, to obtain a first purchase limit of the user; perform second regression processing on the information, to obtain a second purchase limit of the user, where the first regression processing and the second regression processing are different regression processing; and obtain the predicted purchase limit of the user based on the purchase probability, the first purchase limit, and the second purchase limit — 902

Obtain a target loss based on the purchase probability, the first purchase limit, and the second purchase limit — 903

Update, based on the target loss, a parameter of the to-be-trained model until a model training condition is met, to obtain a target model — 904

FIG. 9

FIG. 10a

EP 4 685 723 A1

FIG. 10b

Purchase prediction apparatus

First obtaining module — 1101

First processing module — 1102

Second processing module — 1103

Third processing module — 1104

Second obtaining module — 1105

FIG. 11

Model training apparatus

First obtaining module — 1201

Processing module — 1202

Second obtaining module — 1203

Update module — 1204

FIG. 12

1300

Execution device

Antenna

Antenna

| Receiver 1301 | Transmitter 1302 |
|---|---|

Processor 1303

| Memory 1304 | Application processor 13031 | Communication processor 13032 |
|---|---|---|

FIG. 13

FIG. 14

EP 4 685 723 A1

FIG. 15

## INTERNATIONAL SEARCH REPORT

International application No.

**PCT/CN2024/084654**

### A. CLASSIFICATION OF SUBJECT MATTER

G06Q 30/0202(2023.01)i

According to International Patent Classification (IPC) or to both national classification and IPC

### B. FIELDS SEARCHED

Minimum documentation searched (classification system followed by classification symbols)

IPC: G06Q, G06F16

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI, IEEE: 销售额, 销售金额, 消费, 消费额, 消费概率, 消费金额, 营业额, 营业金额, 预测, 第一, 第二, 概率, 分布, 感知, 回归, 均值, Relu, Softmax, prediction, consumption, purchase, probability, distribution, perception, regression, mean

### C. DOCUMENTS CONSIDERED TO BE RELEVANT

| Category* | Citation of document, with indication, where appropriate, of the relevant passages | Relevant to claim No. |
|---|---|---|
| PX | CN 116611861 A (HUAWEI TECHNOLOGIES CO., LTD.) 18 August 2023 (2023-08-18) claims 1-18, and description, paragraphs 129-262 | 1-18 |
| A | CN 109214585 A (PING AN TECHNOLOGY (SHENZHEN) CO., LTD.) 15 January 2019 (2019-01-15) description, paragraphs 0035-0046 | 1-18 |
| A | CN 110880127 A (BEIJING SANKUAI ONLINE TECHNOLOGY CO., LTD.) 13 March 2020 (2020-03-13) entire document | 1-18 |
| A | CN 113313538 A (SHANGHAI PUDONG DEVELOPMENT BANK CO., LTD.) 27 August 2021 (2021-08-27) entire document | 1-18 |
| A | CN 115630985 A (INDUSTRIAL AND COMMERCIAL BANK OF CHINA CO., LTD.) 20 January 2023 (2023-01-20) entire document | 1-18 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 May 2024** | **05 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/084654**

**C.    DOCUMENTS CONSIDERED TO BE RELEVANT**

| Category* | Citation of document, with indication, where appropriate, of the relevant passages | Relevant to claim No. |
|---|---|---|
| A | US 2016132928 A1 (IBM) 12 May 2016 (2016-05-12)<br>entire document | 1-18 |

**INTERNATIONAL SEARCH REPORT**
Information on patent family members

International application No.

**PCT/CN2024/084654**

| Patent document cited in search report | | | Publication date (day/month/year) | Patent family member(s) | | | Publication date (day/month/year) |
|---|---|---|---|---|---|---|---|
| CN | 116611861 | A | 18 August 2023 | None | | | |
| CN | 109214585 | A | 15 January 2019 | CN | 109214585 | B | 18 April 2023 |
| CN | 110880127 | A | 13 March 2020 | CN | 110880127 | B | 12 April 2022 |
| CN | 113313538 | A | 27 August 2021 | None | | | |
| CN | 115630985 | A | 20 January 2023 | None | | | |
| US | 2016132928 | A1 | 12 May 2016 | US | 2020019991 | A1 | 16 January 2020 |
| | | | | US | 11488207 | B2 | 01 November 2022 |
| | | | | US | 2016132949 | A1 | 12 May 2016 |
| | | | | US | 10482505 | B2 | 19 November 2019 |
| | | | | US | 10460351 | B2 | 29 October 2019 |

Form PCT/ISA/210 (patent family annex) (July 2022)

**REFERENCES CITED IN THE DESCRIPTION**

**Patent documents cited in the description**

- CN 202310372707